# EUROPÄISCHE PATENTSCHRIFT

(11) **EP 2 978 088 B1**
(45) Veröffentlichungstag und Bekanntmachung des Hinweises auf die Patenterteilung: **26.12.2018**
(21) Anmeldenummer: 14177826.6
(22) Anmeldetag: 21.07.2014
(51) Int. Cl.: H02G 1/12

(54) **Abisolierwerkzeug**
Insulation stripping tool
Pince à dénuder

(43) Veröffentlichungstag der Anmeldung: 27.01.2016
(73) Patentinhaber: Wezag GmbH Werkzeugfabrik, 35260 Stadtallendorf (DE)
(72) Erfinder: Zinser, Roman, 35279 Neustadt (DE)
(74) Vertreter: REHBERG HÜPPE + PARTNER

(56) Entgegenhaltungen:
- DE-U1-202008 014 111
- US-A- 4 485 696
- US-A- 5 713 132
- US-A1- 2002 124 410
- US-A1- 2011 138 629
- US-B1- 6 253 641

## Beschreibung

### TECHNISCHES GEBIET DER ERFINDUNG

Die Erfindung betrifft ein Abisolierwerkzeug, welches Einsatz findet zur Entfernung einer ummantelnden Isolierung eines Kabels. Hierbei kann das Abisolierwerkzeug über einen fremdkraftbetätigten Antrieb, insbesondere einen hydraulischen oder elektrischen Antrieb, verfügen. Vorzugsweise handelt es sich bei dem Abisolierwerkzeug aber um ein handbetätigtes Abisolierwerkzeug, bei welchem ein Antrieb mit zwei Handhebeln ausgebildet ist, auf welche der Benutzer Handbetätigungskräfte aufbringen kann.

### STAND DER TECHNIK

Das Abisolieren eines Kabels mittels eines Abisolierwerkzeugs erfordert die folgenden Arbeitsschritte:
- Zunächst wird in einer Einlegestellung des Abisolierwerkzeugs das Kabel in das Abisolierwerkzeug eingelegt.
- Anschließend erfolgt ein Klemmen des Kabels und ein zumindest teilweises Durchtrennen der den Leiter ummantelnden Isolierung in einem Schneidhub, in welchem Messer mit einer Bewegung radial zur Längserstreckung des Kabels bewegt werden.
- Schließlich werden in einem Abisolierhub die in den Einschnitten der ummantelnden Isolierung angeordneten Messer koaxial zur Längsachse des Kabels bewegt, womit der in dem Schneidhub abgetrennte, dem freien Ende des Kabels zugeordnete Axialabschnitt der ummantelnden Isolierung von dem darin liegenden Leiter abgezogen wird.

Zur Ermöglichung des Schneidhubs einerseits und des Abisolierhubs andererseits betätigen Handhebel bekannter Abisolierwerkzeuge ein Getriebe, welches zur Herbeiführung des Schneidhubs eine Schwenkbewegung von Zangenbacken aufeinander zu in einer Schwenkebene erzeugt und andererseits für den Schneidhub eine Bewegung einer Zuglasche koaxial zur Längsachse des Kabels erzeugt. Eine mit zwei Abisolierbacken gebildete Abisoliereinheit ist derart zwischen den Zangenbacken aufgenommen, dass während des Schneidhubs die Verschwenkung der Zangenbacken aufeinander zu auch eine Verschwenkung der Abisolierbacken aufeinander zu zur Folge hat. Andererseits ist die Abisoliereinheit gleitend gegenüber den Zangenbacken gelagert, so dass während des Abisolierhubs (bei unverändertem Schwenkwinkel sowohl der Zangenbacken als auch der Abisolierbacken) durch die Bewegung der an der Abisoliereinheit angelenkten Zuglasche eine gleitende Bewegung der Abisoliereinheit koaxial zur Längsachse des Kabels herbeigeführt werden kann. Die Abisolierbacken der Abisoliereinheit tragen in den dem Anlenkpunkt der Zuglasche abgewandten Endbereich die Messer, welche einerseits für das Einschneiden der ummantelnden Isolierung und andererseits für das Abziehen des Axialabschnitts der ummantelnden Isolierung zuständig sind. Derartige Abisolierwerkzeuge sind beispielsweise bekannt aus den Druckschriften DE 42 05 194 C1, EP 1 324 448 A2, DE 20 2008 014 110 U1 und US 4,485,696 A. Die Druckschrift US 4,485,696 A offenbart dabei lösbar von Abisolierbacken getragene Schneidmesser, wobei die Abisoliermesser nur durch Demontage der Abisolierbacken von dem Abisolierwerkzeug entfernt werden können.

Infolge eines Verschleißes der Messer ist eine Auswechselbarkeit der Abisoliereinheit oder der Messer gewünscht. Möglich ist auch, dass je nach Einsatzzweck des Abisolierwerkzeugs die Nutzung mit unterschiedlichen Messern gewünscht ist. So kann beispielsweise die Nutzung des Abisolierwerkzeugs für Kabel unterschiedlicher Durchmesser des Leiters und/oder der Isolierung oder unterschiedlicher Typen von Kabeln den Einsatz unterschiedlicher Abisoliereinheiten oder Messer erfordern. Möglich ist bspw., dass mit demselben Abisolierwerkzeug der alternative Einsatz von Messern,
- die mit einzelnen unter Umständen federnd abgestützten Lamellen gebildet sind,
- die eine geradlinige Schneide besitzen,
- deren Schneide der Kontur der Isolierung oder des Leiters angepasst ist,
- die mit zwei unmittelbar aneinander anliegenden Messerblättern mit V-förmig verschränkten Schneiden gebildet sind, und/oder
- die mit einer Schneide ausgebildet sind, die nebeneinander mehrere konkav gewölbten Schneidenabschnitten für Kabel unterschiedlicher Durchmesser besitzt,
ermöglicht werden soll.

Zwecks Gewährleistung einer Austauschbarkeit der Messer schlägt die Druckschrift DE 20 2008 000 596 U1 vor, dass in die verschwenkbar mit der Zuglasche verbundenen Abisolierbacken auf den einander zugewandten Innenseiten jeweils eine Messerkassette einsetzbar ist. Die Messerkassetten besitzen hierbei Seitenwandungen, welche in montiertem Zustand zwischen entsprechenden Seitenwandungen der Abisolierbacken aufgenommen sind. Zwischen den Seitenwandungen der Messerkassette und der zugeordneten Abisolierbacke erfolgt eine Verrastung. Hierzu ist in der Messerkassette eine U-förmig gebogene Drahtfeder gelagert, deren Endbereiche stirnseitig aus der Messerkassette hervorstehen. In verrastetem Zustand greift der Grundschenkel des U der Drahtfeder ein in einen Schlitz der Seitenwandung der Abisolierbacke. Für das Lösen der Rastierung und das Entfernen der Messerkassette von der Abisolierbacken ist erforderlich, dass die stirnseitig aus der Messerkassette austretenden Endstücke der Drahtfedern vom Benutzer so zusammengedrückt werden, dass der Grundschenkel des U der Drahtfeder aus dem Schlitz der Abisolierbacke austritt.

DE 20 2008 014 111 U1 beschreibt die Auswechslung der Messer über einen Austausch der Abisolierbacken, wozu erforderlich ist, dass ein Lagerbolzen, welcher eine Zangenbacke arretiert, von dem Abisolierwerkzeug demontiert wird. Erst dann ist die Verschwenkung einer oberen Abisolierbacke nach oben möglich, womit die Abisolierbacke dann aus einer Gabel der Zuglasche entfernt werden kann. Für derart demontierte obere Abisolierbacke kann die untere Abisolierbacke ebenfalls nach oben geschwenkt werden und dann auch aus der Gabel der Zuglasche herausgenommen werden. Anschließend können andere Abisolierbacken mit Messern mit einer anderen Schneidenform in der Gabel der Zuglasche montiert werden.

Aus einem Prospekt des Unternehmens Weidmüller mit der Prospekt-Nr.: 1132660000/07/2009/SMMW ist ein unter der Kennzeichnung "stripax" (eingetragene Marke) vertriebenes Abisolierwerkzeug bekannt, bei welchem ein leichter Austausch der Messer erfolgen soll, indem zunächst die obere Zangenbacke von dem Abisolierwerkzeug demontiert wird. Anschließend kann die Abisoliereinheit mit den beiden Abisolierbacken, welche die Messer tragen, als eine Einheit von dem Abisolierwerkzeug entfernt werden und gegen eine andere Abisoliereinheit ausgetauscht werden.

Seitens der JOKARI-Krampe GmbH wird ein Abisolierwerkzeug "Sensor Special No. 20300" vertrieben, bei welchem austauschbare Messerblöcke an Zangenbacken gehalten sind. Die Messerblöcke sind hier als komplex geformte massive metallische Formteile ausgebildet, welche integral sowohl die Schneiden als auch ein von einem Fortsatz ausgebildetes Montageelement ausbilden. Das Montageelement ist von der Seite in Richtung einer Montageachse in eine Montagenut der Zangenbacken einsetzbar. In der montierten Stellung der Messerblöcke werden diese einerseits durch einen in die Montagenut eingebrachten 2-Komponentenkleber sowie andererseits durch Sicherungsklammern gesichert. Das Auswechseln der Messerblöcke erfordert eine plastische Verformung der Sicherheitsklammern sowie das Lösen des 2-Komponentenklebstoffes.

Aus dem Prospekt der RENNSTEIG Werkzeuge GmbH "2013/2014: Kabelverarbeitung" (Drucklegungs-Kennzeichnung "rwz 06-2013/A-5000") ist ein unter der Kennzeichnung "MultiStrip 10" vertriebenes Abisolierwerkzeug bekannt, bei welchem die mit den verschwenkbaren Abisolierbacken gebildete Abisoliereinheit herausnehmbar ist. Hierbei sind jeweils Messer mit den Stirnseiten der Abisolierbacken verschraubt. Da die die Messer haltenden Schrauben in montiertem Zustand der Abisoliereinheit von den Zangenbacken und den Zangenbacken zugeordneten Klemmbacken für das Kabel abgedeckt sind, erfordert ein Austausch der Messer in jedem Fall die Demontage der Abisoliereinheit.

Die Druckschriften US 5,713,132 A, US 6,253,641 B1 und US 2011/0138629 A1 betreffen nicht gattungsgemäße Abisolierwerkzeuge, welche ausschließlich über einen Schneidhub, nicht jedoch über einen durch den Antrieb herbeigeführten folgenden Abisolierhub verfügen, sodass hier für ein Abisolieren manuell an dem Kabel gezogen werden muss, während die im Schneidhub eingeschnittene Ummantelung von dem Abisolierwerkzeug zurückgehalten werden muss.

### AUFGABE DER ERFINDUNG

Der vorliegenden Erfindung liegt die Aufgabe zugrunde, ein Abisolierwerkzeug mit einem auswechselbaren Schneidelement sowie ein Schneidelement vorzuschlagen, welches hinsichtlich des Aufwands für die Montage und Demontage verbessert ist.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Die Erfindung betrifft ein Abisolierwerkzeug mit mindestens einer Abisolierbacke, an welcher auswechselbar ein Schneidelement gehalten ist. Vorzugsweise besitzt das Abisolierwerkzeug zwei Abisolierbacken, an welchen jeweils ein Schneidelement auswechselbar gehalten ist. Hierbei erfolgt die Montage des Schneidelements an der Abisolierbacke durch Montieren des Schneidelements mit der Abisolierbacke entlang einer Montageachse. Beispielsweise erfolgt dieses Montieren entlang der Montageachse gemäß dem eingangs genannten Stand der Technik des Unternehmens JOKARI-Krampe GmbH durch Einführen des Fortsatzes des als Messerblock ausgebildeten Schneidelements in die die Montageachse vorgebende Montagenut. Es versteht sich, dass vielfältige anderweitige Möglichkeiten für die Montage möglich sind, beispielsweise mit beliebiger geradlinigem oder kurvenförmigem Verlauf und/oder beliebiger Orientierung der Montageachse, Einführen von Fortsätzen oder Stiften des Schneidelements (oder aber der Abisolierbacke) in eine Ausnehmung der Abisolierbacke (oder aber des Schneidelements) u. ä.

Das erfindungsgemäße Abisolierwerkzeug verfügt über eine mit zwei Abisolierbacken gebildeten Abisoliereinheit, welche fest an dem Abisolierwerkzeug vorgesehen sein kann oder auch demontierbar sein kann. Für diese Ausgestaltung sind die beiden Abisolierbacken durch den Antrieb, insbesondere durch Betätigung von Handhebeln und eine zwischen Handhebel und Abisolierbacken zwischengeschaltete getriebliche Verbindung, aufeinander zu verschwenkbar, womit der Schneidhub gebildet ist. Hierbei erfolgt die Bewegung der beiden Abisolierbacken in einer Schwenkebene. Mit Ende des Schneidhubs haben die mit den Abisolierbacken montierten Schneidelemente die ummantelnde Isolierung des Kabels zumindest teilweise durchtrennt. In einem auf den Schneidhub folgenden Abisolierhub sind dann durch den Antrieb die beiden Abisolierbacken entlang einer Abisolierachse bewegbar, womit dann der endseitige Axialbereich der ummantelnden Isolierung, welcher zuvor zumindest teilweise abgetrennt worden ist, von dem Leiter abgezogen wird. Für diese erfindungsgemäße Ausgestaltung ist die Montageachse (und ggf. die Längsachse einer Montagenut) vertikal zu der Schwenkebene der Abisolierbacken und/oder vertikal zu der Abisolierachse orientiert. Somit sind das Schneidelement und die Montagenut für den Benutzer besonders einfach "von der Seite" zugänglich. Andererseits hat eine derartige Ausrichtung der Montageachse zur Folge, dass während des Schneidhubs und während des Abisolierhubs keine Kräfte infolge des Schneidens und Abisolierens auf das Schneidelement aufgebracht werden, welche in Richtung der Montageachse wirken und damit bestrebt sind, das Schneidelement von der Abisolierbacke zu demontieren oder die Lage zu verändern.

Der Erfindung liegt die Beobachtung zugrunde, dass gemäß dem eingangs erläuterten Stand der Technik die Montage oder Demontage aufwendige Arbeitsschritte erfordert, welche insbesondere in der Montage und Demontage der vollständigen Abisoliereinheit, dem stirnseitigen Verschrauben der Messer mit den Abisolierbacken, der Applikation und dem Lösen eines 2-Komponentenklebstoffs und der plastischen Verformung von Sicherungsklammern bestehen.

Erfindungsgemäß wird vorgeschlagen, dass bewegungsgesteuert durch einen Antrieb des Abisolierwerkzeugs eine Wechselstellung des Abisolierwerkzeugs herbeiführbar ist. Während in mindestens einer anderen Stellung oder einem Stellungsbereich das Schneidelement blockiert ist hinsichtlich einer Bewegung entlang der Montageachse, um insbesondere zu vermeiden, dass sich das Schneidelement ungewollt von der Abisolierbacke löst oder dass das Schneidelement eine unerwünschte Stellung relativ zu der Abisolierbacke einnimmt, wird in der Wechselstellung das Schneidelement freigegeben. Infolge der Freigabe des Schneidelements ist die Sicherung des Schneidelements gegenüber der Abisolierbacke zumindest reduziert, vorzugsweise vollständig beseitigt, womit dann eine Bewegung entlang der Montageachse möglich ist. Somit kann in der Wechselstellung eine Montage eines Schneidelements mit der Abisolierbacke erfolgen sowie eine Demontage eines anderen Schneidelements erfolgen. Ohne dass insbesondere eine plastische Verformung einer Sicherungsklammer, die Applikation oder Entfernung eines 2-Komponentenklebstoffs, der Einsatz eines Werkzeugs wie eines Schraubendrehers zum Verschrauben des Schneidelements mit der Abisolierbacke erforderlich ist, kann durch alleinige Betätigung des Antriebs die Wechselstellung herbeigeführt werden und in der Wechselstellung eine Sicherungswirkung für das Schneidelement reduziert oder vollständig beseitigt werden. Beispielsweise kann in der Wechselstellung allein durch Überwindung einer Reibung oder einer etwaigen Rastierung die Bewegung des Schneidelements entlang der Montageachse erfolgen.

Neben einer vereinfachten Montage und Demontage für das erfindungsgemäße Abisolierwerkzeug kann unter Umständen durch die erfindungsgemäße Ausgestaltung auch die Bediensicherheit erhöht werden, da außerhalb der Wechselstellung eine zuverlässige Sicherung des Schneidelements gegenüber der Abisolierbacke gewährleistet sein kann, ohne dass die Sicherungswirkung abhängig ist von der Sorgfalt des Benutzers bei der Montage, insbesondere der Sorgfältigkeit der plastischen Verformung einer Sicherungsklammer, der Sorgfältigkeit der Applikation eines 2-Komponentenklebstoffs und/oder der Sorgfältigkeit eines Verschraubens eines Schneidelements mit der Abisolierbacke.

Für die erfindungsgemäße Ausgestaltung des Abisolierwerkzeugs erfolgt die Herbeiführung der Wechselstellung bewegungsgesteuert durch Bewegung der Abisoliereinheit durch den Antrieb entlang der Abisolierachse. Dieser Ausgestaltung liegt die Erkenntnis zugrunde, dass während des Abisolierhubs ohnehin eine gleitende Bewegung zwischen den Abisolierbacken der Abisoliereinheit einerseits und den Zangenbacken andererseits erfolgt. Diese Relativbewegung kann genutzt werden, um bewegungsgesteuert die Freigabe des Schneidelements herbeizuführen. Um lediglich ein einfaches, nicht beschränkendes Beispiel zu nennen, kann sich abseits der Wechselstellung eine Blockade des Schneidelements in Montagerichtung durch eine Wandung der Zangenbacke ergeben, welche mit Erreichen der Wechselstellung infolge der Relativbewegung zwischen Zangenbacke und Abisolierbacke so von der Montagenut und dem Schneidelement weg bewegt ist, dass das Schneidelement freigegeben ist.

Möglich ist, dass es sich bei dem Antrieb, mittels dessen die Wechselstellung herbeiführt ist, um den Antrieb handelt, welcher auch für die Betätigung von Zangenbacken und/oder Abisolierbacken zuständig ist. Beispielsweise kann der Antrieb mit den Handhebeln gebildet sein, über welche einerseits die Betätigungskräfte zur Bearbeitung des Werkstücks aufgebracht und übertragen werden und andererseits die Wechselstellung herbeigeführt wird.

Bei der erfindungsgemäßen Wechselstellung kann es sich um eine beliebige Stellung des Abisolierwerkzeugs handeln. Um lediglich einige Beispiele zu nennen, kann es sich bei der Wechselstellung um eine Stellung handeln, welche während eines normalen Betriebs des Abisolierwerkzeugs und während des "normalen" Arbeitshubs des Abisolierwerkzeugs nicht erreicht wird, so dass die Wechselstellung gezielt nur herbeigeführt wird, wenn eine Montage oder Demontage des Schneidelements gewünscht ist. Ebenfalls von der Erfindung sind aber Ausführungsformen, bei welchen die Wechselstellung während des normalen Arbeitshubs des Abisolierwerkzeugs erreicht oder passiert wird. Vorzugsweise entspricht die Wechselstellung einer Betriebsstellung, in welcher das Schneidelement und die Abisolierbacken nicht beaufschlagt sind. Beispielsweise kann die Wechselstellung eine Öffnungsstellung des Abisolierwerkzeugs sein, in welcher beispielsweise das Werkstück in das Abisolierwerkzeug eingelegt werden kann und/oder aus diesem entnommen werden kann. Ist die Wechselstellung als Öffnungsstellung des Abisolierwerkzeugs ausgebildet, ist unter Umständen die Montage und Demontage des Schneidelements weiter vereinfacht, da dann das Schneidelement und die Abisolierbacke besonders gut zugänglich sind.

Während grundsätzlich beliebige Montagemöglichkeiten zwischen Schneidelement und Abisolierbacke möglich sind, schlägt die Erfindung in weiterer Ausgestaltung vor, dass das Schneidelement über einen formschlüssigen Eingriff eines Montagelements in eine entlang der Montageachse orientierte Montagenut auswechselbar an der Abisolierbacke gehalten ist. Um lediglich ein Beispiel zu nennen, kann mit dem formschlüssigen Eingriff des Montageelements in die Montagenut eine Art "Schwalbenschwanz-Verbindung" im weiteren Sinne gebildet sein, womit auch Konturen des Montageelements einerseits und der Montagenut andererseits umfasst sind, welche nicht der strengen Form eines "Schwalbenschwanzes" entsprechen, solange noch ein formschlüssiger Eingriff durch Ausbildung mindestens einer geeigneten Hinterschneidung gewährleistet ist. Der erfindungsgemäße formschlüssige Eingriff eines Montageelements in eine Montagenut ermöglicht einerseits ein einfaches Einführen entlang der durch die Montagenut vorgegebenen Montageachse. Andererseits ermöglicht der formschlüssige Eingriff eine exakte Vorgabe der Ausrichtung des Schneidelements relativ zur Abisolierbacke und die gute Aufnahme und Übertragung von Kräften zwischen Schneidelement und Abisolierbacke.

Grundsätzlich möglich ist, dass die Montagenut an dem Schneidelement vorgesehen ist, während die Abisolierbacke das in die Montagenut einzusetzende Montageelement besitzt. In bevorzugter Ausgestaltung der Erfindung besitzt aber die Abisolierbacke die Montagenut, während das Schneidelement das in die Montagenut einzusetzende Montageelement besitzt.

Grundsätzlich sind beliebige ein- oder mehrstückige Ausbildungen des Schneidelements möglich. In bevorzugter Ausgestaltung der Erfindung ist das Schneidelement mit einem Messer gebildet, welches vorzugsweise aus einem zumindest im Bereich der Schneide gehärteten Metall hergestellt ist. Des Weiteren ist das Schneidelement mit einem Haltekörper gebildet, welcher beispielsweise aus Kunststoff hergestellt sein kann. Vorzugsweise ist der Haltekörper stoffschlüssig mit dem Messer verbunden. Der Haltekörper ist hierbei multifunktional ausgebildet:
- Der Haltekörper hält das Messer und nimmt auf das Messer wirkende Kräfte auf.
- Des Weiteren ist der Haltekörper mit der Montagenut oder dem Montageelement ausgebildet, so dass der Haltekörper letztendlich die Schnittstelle zu der Abisolierbacke bildet und die Montage zwischen Schneidelement und Abisolierbacke ermöglicht.
- Möglich ist auch, dass der Haltekörper die Handhabung des Schneidelements verbessert, was allein durch dessen Größe oder auch dessen Formgebung bedingt sein kann.

Mit dem Messer und dem Haltekörper ist insbesondere ein integrales Schneidelement gebildet. Möglich ist, dass der Einsatz von Metall als Werkstoff auf den erforderlichen Bereich, hier das Messer, beschränkt ist, während für den Haltekörper ein leichteres und unter Umständen kostengünstigeres Material gewählt wird. Andererseits kann durch Ausbildung des Haltekörpers beispielsweise aus Kunststoff eine Beeinflussung des Einführverhaltens und der Reibverhältnisse während der Montage und Demontage erfolgen. Schließlich kann auch eine etwaige Elastizität des Haltekörpers gezielt genutzt werden, beispielsweise durch Ausbildung einer Rasteinrichtung zwischen Montagenut und Montageelement und/oder zur elastischen Abstützung des Messers.

In bevorzugter Ausgestaltung der Erfindung ist die Wechselstellung am Ende eines Arbeitshubs des Abisolierwerkzeugs angeordnet, wobei an diesem Ende des Arbeitshubs insbesondere die Handhebel eines manuellen Antriebs vollständig geschlossen sind. Möglich ist, dass an diesem Ende des Arbeitshubs die Zangenbacken und Abisolierbacken geöffnet sind, um eine Entnahme des abisolierten Kabels zu ermöglichen. Diese Öffnungsstellung kann ebenfalls vorteilhaft für das etwaige Auswechseln des Schneidelements genutzt werden.

Für eine erfindungsgemäße Weiterbildung des Abisolierwerkzeugs ist das Schneidelement abseits der Wechselstellung in Richtung der Montageachse durch ein an der Zangenbacke gehaltenes oder von dieser ausgebildetes Sicherungselement blockiert, so dass die Demontage und ein unerwünschtes Lösen des Montageelements von der Abisolierbacke nicht möglich ist. Hingegen ist in der Wechselstellung zur Ermöglichung der Montage und Demontage das Sicherungselement von dem Schneidelement wegbewegt, so dass das Schneidelement frei zugänglich ist.

In weiterer Ausgestaltung der Erfindung verfügt das Abisolierwerkzeug über eine Einlegestellung, in welcher das Werkstück in das Abisolierwerkzeug eingelegt wird. Des Weiteren ist eine Klemmstellung vorhanden, in welcher das Werkstück zwischen Klemmbacken des Abisolierwerkzeugs geklemmt wird. In einer Schneidstellung ist das Werkstück durch das Schneidelement eingeschnitten. Möglich ist hierbei, dass das Klemmen und Schneiden gleichzeitig erfolgt. In einer Entnahmestellung kann das Werkstück aus dem Isolierwerkzeug entnommen werden. Hierbei kann die Wechselstellung in einer der genannten Stellungen oder vor oder hinter den genannten Stellungen angeordnet sein. Die genannten Stellungen sind in der angeführten Reihenfolge über den Arbeitshub des Abisolierwerkzeugs hintereinander liegend angeordnet. Hierbei ist der Schneidhub zwischen der Einlegestellung und der Schneidstellung ausgeführt wird, während der Abisolierhub zwischen der Schneidstellung und der Entnahmestellung ausgeführt wird. Von der Einlegestellung zu der Klemm- und/oder Schneidstellung nähern sich die Zangenbacken und die Abisolierbacken gemeinsam einander durch Verschwenkung an. Von der Klemmstellung zu der Schneidstellung ändert sich der Schwenkwinkel der Zangenbacken und Abisolierbacken nicht (oder nicht wesentlich). Vielmehr erfolgt hier lediglich eine gleitende Bewegung der Abisoliereinheit relativ zu den Zangenbacken durch Betätigung der Zuglasche. Für die Entnahmestellung ist wieder ein Öffnen der Zangen backen und Abisolierbacken erfolgt.

Durchaus möglich ist, dass der Benutzer des erfindungsgemäßen Abisolierwerkzeugs mehrere identische Schneidelemente für einen Austausch nach einem Verschleiß und/oder unterschiedliche Schneidelemente lose mit sich führt. Ebenfalls möglich ist, dass die Schneidelemente in einer Vorratseinrichtung oder einem Behälter separat von dem Abisolierwerkzeug bevorratet werden. In besonderer Ausgestaltung des erfindungsgemäßen Abisolierwerkzeugs verfügt dieses selber über eine Vorratseinrichtung für die Bevorratung mindestens eines Schneidelements. Möglich ist, dass alternativ oder zusätzlich die Vorratseinrichtung auch der Bevorratung mindestens eines weiteren Zubehörteils wie beispielsweise eines Klemmelements oder einer Klemmbacke dient. Somit ist eine kompakte Einheit geschaffen, für welche gewährleistet ist, dass bei vorhandenem Abisolierwerkzeug auch immer die in der Vorratseinrichtung bevorrateten Schneidelemente (und etwaige weitere Zubehörteile) vorhanden sind, womit insbesondere ein Verlust eines Schneidelements oder Zubehörteils oder ein aufwendiges Suchen des Schneidelements oder Zubehörteils entfällt.

Grundsätzlich kann die Vorratseinrichtung an beliebiger Stelle des Abisolierwerkzeugs angeordnet sein, beispielsweise im Bereich des Kopfs des Abisolierwerkzeugs. In besonderer Ausgestaltung der Erfindung ist die Vorratseinrichtung im Bereich eines Handhebels des Abisolierwerkzeugs angeordnet. Hierbei kann die Vorratseinrichtung bspw. endseitig an einen Grundkörper des Handhebels angesetzt sein, im Bereich einer Seitenfläche des Handhebels an diesen angesetzt sein oder sogar in das Innere des Handhebels integriert sein.

In besonderer Ausgestaltung verfügt der Handhebel über einen Grundkörper sowie einen Deckel. Der Grundkörper besitzt einen offenen Querschnitt, der durch den Deckel zumindest teilweise verschließbar ist. Der Deckel und der offene Querschnitt des Grundkörpers begrenzen gemeinsam einen Innenraum des Handhebels. In diesem Innenraum können das Schneidelement und/oder das Klemmelement angeordnet sein. Durch den Deckel kann bspw. eine Verliersicherung des Schneidelements und/oder des Klemmelements aus dem Innenraum des Handhebels gebildet sein, eine Abdichtung des Innenraums erfolgen, und/oder ein optischer Verschluss gebildet sein. Möglich ist auch, dass durch die äußere Formgebung des Deckels und des Grundkörpers trotz der Bevorratung des Schneidelements und/oder des Klemmelements im Innenraum des Handhebels eine für die Hand des Benutzers angenehme Außenkontur bereitgestellt wird.

Grundsätzlich möglich ist, dass das Schneidelement und/oder das Klemmelement lose in dem Innenraum bevorratet werden. Ebenfalls möglich ist, dass das Schneidelement und/oder das Klemmelement an dem Grundkörper des Handhebels gehalten sind, was beispielsweise durch Verrastung in dem Grundkörper, Verschraubung mit diesem oder Einführen in eine von dem Grundkörper ausgebildete Montagenut erfolgen kann. In bevorzugter Ausgestaltung der Erfindung sind/ist das Schneidelement und/oder das Klemmelement an dem Deckel gehalten. Dies hat den Vorteil, dass mit Aufklappen des Deckels oder Demontage des Deckels das Schneidelement und/oder das Klemmelement besonders einfach zugänglich ist/sind. Durchaus möglich ist sogar, dass einem Abisolierwerkzeug mehrere Deckel zugeordnet sind, welche austauschbar sind und an welchen jeweils unterschiedliche Schneidelemente und/oder Klemmelemente gehalten sind. Somit kann der Benutzer das Abisolierwerkzeug mit einem Deckel mit Schneidelementen oder Klemmelementen, welche für den bevorstehenden Einsatz geeignet sind, ausstatten, während andere Schneidelemente oder Klemmelemente, welche derzeit nicht von Interesse sind, an einem anderen Deckel bevorratet werden können, welcher dann beispielsweise in einer Werkzeugkiste abgelegt werden kann.

Für die Anordnung des Deckels an dem Handhebel gibt es ebenfalls vielfältige Möglichkeiten. Durchaus denkbar ist, dass der Deckel die dem Kopf des Abisolierwerkzeugs abgewandte Stirnseite des Handhebels verschließt. Eine vergrößerte Fläche kann der Deckel besitzen (und damit u. U. die Bevorratung einer größeren Zahl von Schneidelementen oder Klemmelementen ermöglichen), wenn der Deckel im Bereich einer Längsfläche des Handhebels angeordnet ist. Ist beispielsweise der Deckel auf einer Seite des Handhebels angeordnet, welche in montiertem Zustand dem anderen Handhebel abgewandt ist, kann der Deckel frei von dem Handhebel entnommen oder nach außen abgeklappt werden, ohne dass diese Bewegung durch den anderen Handhebel beschränkt oder blockiert ist. Das Entsprechende gilt dann, wenn der Deckel auf einer Seite des Handhebels montiert ist, deren Flächennormale vertikal zu der Schwenkebene der Handhebel orientiert ist. In bevorzugter Ausgestaltung der Erfindung ist aber der Deckel auf der Seite des Grundkörpers angeordnet, welche in einem montierten Zustand des Handhebels dem anderen Handhebel zugewandt ist. Dieser Ausgestaltung liegt insbesondere die Erkenntnis zugrunde, dass bei der Applikation von Handkräften auf die beiden Handhebel keine Beaufschlagung dieser Seite durch die Hand des Benutzers erfolgt. Damit ist der Deckel nicht den Handkräften ausgesetzt. Andererseits sind die Anforderungen an die Konturgebung des Deckels für die Ermöglichung einer guten Haptik des Abisolierwerkzeugs für eine derartige Anordnung des Deckels zumindest verringert. Diese Ausgestaltung der Erfindung nutzt u. U. auch die Erkenntnis, dass für die auseinandergespreizten Handhebel zwischen den Handhebeln ein hinreichender Zwischenraum verbleibt, um den Deckel zu montieren und zu demontieren oder aufzuschwenken.

Für die Befestigung und Lagerung des Deckels an dem Grundkörper des Handhebels gibt es vielfältige Möglichkeiten. Um lediglich einige nicht beschränkende Beispiele zu nennen, kann der Deckel mit dem Grundkörper verschraubt, vernietet, verclipst, in den Grundkörper eingeschoben o. ä. werden. Für eine erfindungsgemäße Ausgestaltung ist der Deckel verschwenkbar an dem Grundkörper des Handhebels gelagert. In diesem Fall kann der Deckel eine Schließstellung besitzen, in welcher der Deckel den Grundkörper des Handhebels zumindest teilweise verschließt, sowie eine Öffnungsstellung, in welcher der Deckel von dem Grundkörper des Handhebels weggeschwenkt ist und welche die Entnahme und das Einführen von Schneidelementen oder Klemmelementen in den Deckel oder den Grundkörper des Handhebels ermöglichen kann.

In bevorzugter Weiterbildung des Abisolierwerkzeugs ist der Deckel in einer Schließstellung mit dem Grundkörper des Handhebels verrastet oder verriegelt.

Für eine Weiterbildung des erfindungsgemäßen Schneidelements erfüllt dieses eine weitere Funktion: Das Schneidelement besitzt für diese Ausgestaltung ein Führungs- oder Halteorgan für einen Abstandshalter, welcher einen Anschlag für die Stirnseite des Kabels bei dem Einlegen des Kabels in das Abisolierwerkzeug bildet, womit der Abstandshalter die Länge des Axialbereichs der zu entfernenden Isolierung vorgibt. Möglich ist hierbei, dass an dem Schneidelement der Abstandshalter an einer festen Position gehalten ist. Ebenfalls möglich ist allerdings, dass an dem Schneidelement veränderliche Positionen des Abstandshalters ermöglicht sind. Schließlich ist möglich, dass das Führungs- oder Halteorgan zusammenwirkt mit einem entsprechenden Führungs- oder Halteorgan eines anderen Bauelements des Abisolierwerkzeugs, so dass der Abstandshalter sowohl im Bereich des Schneidelements als auch im Bereich des anderen Bauelements angeordnet werden kann, wodurch sich ein vergrößerter Stellbereich für die Position des Abstandshalters (und damit die abzuisolierende Länge) ergibt. Beispielsweise kann sich eine in dem Schneidelement gebildete Führungsnut in ein weiteres Bauelement des Abisolierwerkzeugs fortsetzen, so dass der Abstandshalter sowohl im Bereich des Schneidelements als auch im Bereich des weiteren Bauelements verschiebbar ist. Möglich ist hierbei auch, dass Positionen des Abstandshalters gesichert sind, beispielsweise durch eine Rastierung, welche im Bereich des Schneidelements und/oder des weiteren Bauelements gebildet sein kann (vgl. bspw. die Rastierung gemäß DE 20 2008 014 111 U1).

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element wie einem Schneidelement, einer Abisolierbacke oder einer Montagenut die Rede ist, ist dies so zu verstehen, dass genau ein Element, zwei Elemente oder mehr Elemente vorhanden sein können. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Abisolierzange in einer Einführstellung mit geöffneter Vorratseinrichtung in einer Draufsicht.
- **Fig. 2**: zeigt die Abisolierzange gemäß Fig. 1 in der Einführstellung mit geöffneter Vorratseinrichtung bei Schnittführung parallel zur Zeichenebene gemäß Figur 1.
- **Fig. 3**: zeigt die Abisolierzange gemäß Fig. 1 und 2 in der Einführstellung mit eingeführtem Kabel und geschlossener Vorratseinrichtung bei Schnittführung parallel zur Zeichenebene gemäß Figur 1.
- **Fig. 4**: zeigt die Abisolierzange gemäß Fig. 1 bis 3 bei Schnittführung parallel zur Zeichenebene gemäß Figur 1 in einer Schneid- und Klemmstellung, wobei die Handhebel gegenüber Fig. 3 über einen Schneidhub teilweise geschlossen sind.
- **Fig. 5**: zeigt die Abisolierzange gemäß Fig. 1 bis 4 bei Schnittführung parallel zur Zeichenebene gemäß Figur 1 in einer Abisolierstellung, wobei die Handhebel gegenüber Fig. 4 über einen Abisolierhub weiter geschlossen sind.
- **Fig. 6**: zeigt die Abisolierzange gemäß Fig. 1 bis 5 bei Schnittführung parallel zur Zeichenebene gemäß Figur 1 in einer Wechsel- und Entnahmestellung, wobei die Handhebel gegenüber Fig. 5 weiter geschlossen sind.
- **Fig. 7**: zeigt die Abisolierzange gemäß den Fig. 1 bis 6 in einer räumlichen Darstellung bei demontierten Schneidelement.
- **Fig. 8**: zeigt ein Schneidelement in einer räumlichen Darstellung.
- **Fig. 9**: zeigt in einer Explosionsdarstellung ein Schneidelement und die zugeordnete Abisolierbacke.
- **Fig. 10**: zeigt eine Draufsicht auf eine Abisolierzange mit einem Handhebel, der mit einer separaten Ummantelung gebildet ist.
- **Fig. 11**: zeigt in einer teilgeschnitteten räumlichen Darstellung eine weitere Ausführungsform einer Abisolierzange.
- **Fig. 12**: zeigt in einer veränderten teilgeschnittenen räumlichen Ansicht die Abisolierzange gemäß Fig. 11.
- **Fig. 13**: zeigt einen Zangenkopf einer weiteren Abisolierzange mit in den Zangenkopf integrierten Vorratseinrichtungen für Zubehörteile, wobei hier die Vorratseinrichtungen in einer geöffneten Stellung dargestellt sind.
- **Fig. 14**: zeigt den Zangenkopf gemäß Fig. 13, wobei hier die Vorratseinrichtungen in einer geschlossenen Stellung dargestellt sind.

### FIGURENBESCHREIBUNG

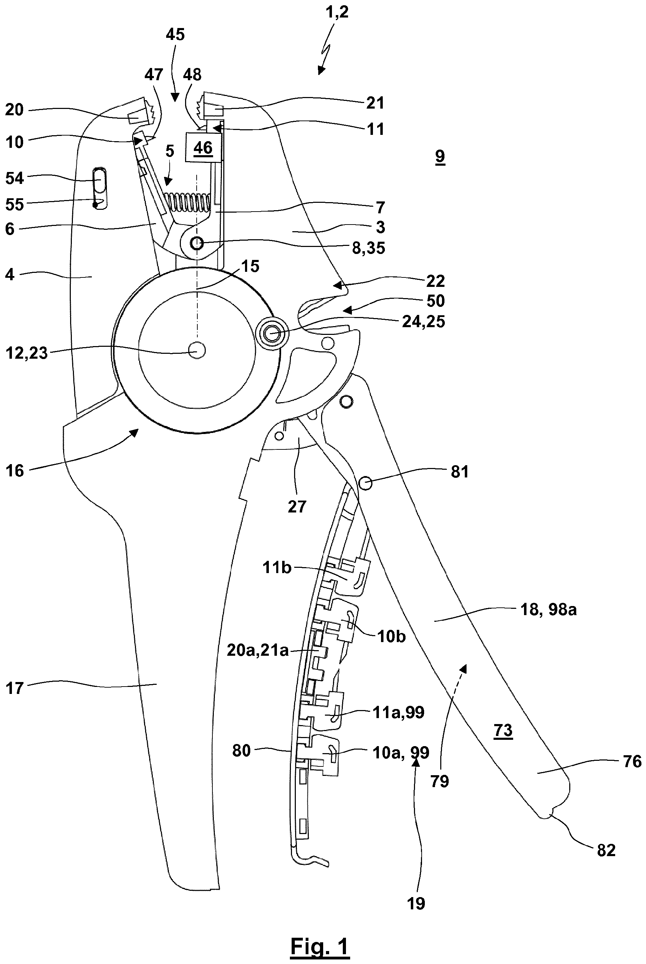

In den Fig. ist ein Abisolierwerkzeug 1 in Form einer handbetätigten Abisolierzange 2 dargestellt, ohne dass die Erfindung auf eine handbetätigte Abisolierzange 2 beschränkt sein soll. Die Abisolierzange 2 verfügt über zwei Zangenbacken 3, 4. Zwischen den beiden Zangenbacken 3, 4 ist eine Abisoliereinheit 5 aufgenommen, welche mit zwei Abisolierbacken 6, 7 gebildet ist. Die Abisolierbacken 6, 7 sind in einem Endbereich über ein Gelenk 8 verschwenkbar in einer parallel zur Zeichenebene gemäß **Fig. 1** orientierten Schwenkebene 9 verschwenkbar miteinander verbunden. Die Isolierbacken 6, 7 tragen in ihren freien Endbereichen jeweils ein Schneidelement 10, 11. Die Zangenbacken 3, 4 sind über ein Gelenk 12 in der Schwenkebene 9 verschwenkbar miteinander verbunden. Eine Verschwenkung der Zangenbacken 3, 4 aufeinander zu geht infolge eines Kontaktes über Kontaktflächen 13, 14 der Zangenbacken 3, 4 mit den Abisolierbacken 6, 7 und/oder den Schneidelementen 10, 11 einher mit einer Verschwenkung der Abisolierbacken 6, 7. Der Schwenkwinkel der Zangenbacken 3, 4 ist dabei kleiner als der Schwenkwinkel der Abisolierbacken 6, 7, da der Abstand der Kontaktflächen13, 14 von dem Gelenk 12 größer ist als der Abstand der Kontaktflächen13, 14 von dem Gelenk 8. Darüber hinaus ist die Abisoliereinheit 5 mit den Abisolierbacken 6, 7 ohne Veränderung des Schwenkwinkels in Richtung einer Abisolierachse 15 relativ verschieblich, was durch Ausbildung eines Gleitkontakts im Bereich der Kontaktflächen 13, 14 ermöglicht wird. Hierbei bildet die gemeinsame Verschwenkung der Zangenbacken 3, 4 einerseits und der Abisolierbacken 6, 7 andererseits aufeinander zu einen Schneid- und/oder Klemmhub, während die Bewegung der Abisoliereinheit 5 entlang der Abisolierachse 15 ohne Veränderung des Schwenkwinkels einen Abisolierhub bildet.

Ein Antrieb 16 erzeugt sowohl den Schneidhub als auch den Abisolierhub. Für das dargestellte Ausführungsbeispiel ist der Antrieb 16 mit zwei Handhebeln 17, 18 sowie einer zwischen die Handhebel 17, 18 und die Zangenbacken 3, 4 und die Abisoliereinheit 5 zwischengeordneten getrieblichen Verbindung gebildet. Die getriebliche Verbindung ermöglicht für einen Arbeitshub der Handhebel 17, 18 mit Verschwenkung der Handhebel 17, 18 aufeinander zu nacheinander den Schneidhub und den Abisolierhub.

Der Handhebel 18 bildet eine Vorratseinrichtung 19 aus, welche der Bevorratung von weiteren Paaren von Schneidelementen 10a, 11a; 10b, 11b dient. Die Schneidelemente 10a, 11a; 10b, 11b können ausgetauscht werden gegen die mit den Abisolierbacken 6, 7 montierten Schneidelemente 10, 11. Für das dargestellte Ausführungsbeispiel bevorratet die Vorratseinrichtung 19 auch Klemmbacken 20a, 20b; 21a, 21b, welche gegen Klemmbacken 20, 21 ausgetauscht werden können, die vorzugsweise elastisch ausgebildet sind, im außenliegenden Endbereich in Nuten der Zangenbacken 3, 4 einsetzbar sind und das in die Abisolierzange 2 eingelegte Kabel halten und fixieren. Während die Klemmbacken 20, 21 in dem mit den Zangenbacken 3, 4 montierten Zustand eine verhältnismäßig große Erstreckung vertikal zur Zeichenebene gemäß Fig. 1 besitzen, ist deren Erstreckung in Richtung der Längsachse des eingelegten Kabels verhältnismäßig klein. In der Vorratseinrichtung 19 können die Klemmbacken 20, 21 platzsparend ohne Erfordernis der Vergrößerung der Erstreckung des Handhebels 18 vertikal zur Zeichenebene bevorratet werden, wenn die Klemmbacken 20, 21 mit ihrer Erstreckung in Richtung der Längsachse des Kabels (für in die Zangenbacken 3, 4 montierten Klemmbacken 20, 21) in Richtung der Dicke des Handhebels 18 (also vertikal zur Zeichenebene gemäß Fig. 1) in der Vorratseinrichtung 19 bevorratet werden.

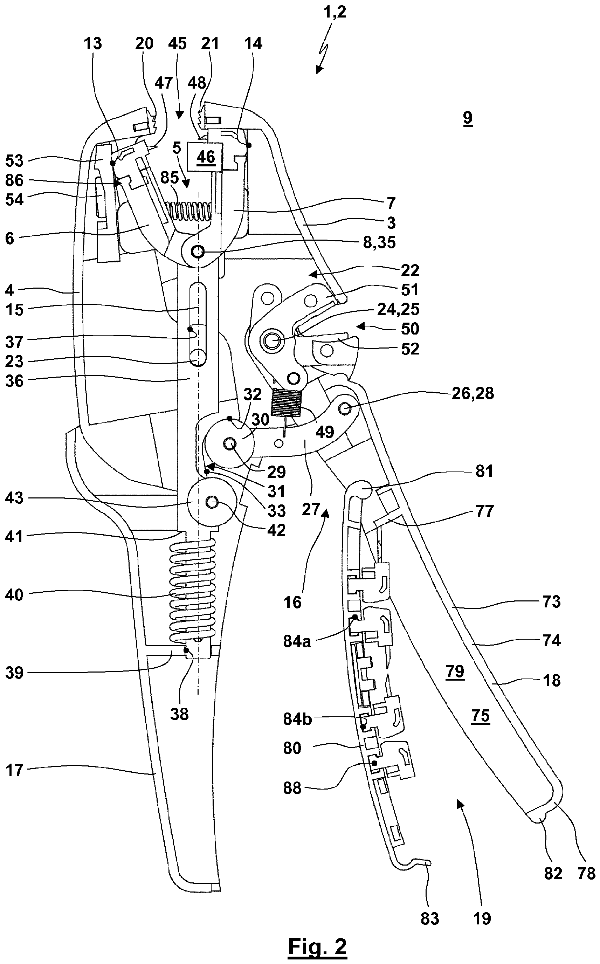

Der Aufbau und die Kinematik der Abisolierzange 2 und der getrieblichen Verbindung des Antriebs 16 sind in der geschnittenen Darstellung gemäß **Fig.2** zu erkennen: Der Handhebel 17 und die Zangenbacke 3 sind starr miteinander verbunden. Mit der Zangenbacke 3 und dem Handhebel 17 ist somit ein starres Zangenteil 22 gebildet. Die Zangenbacke 4 ist über das Gelenk 12 drehbar in der Schwenkebene 9 an dem starren Zangenteil 22 gelagert, was mittels eines an dem starren Zangenteil 22 gehaltenen Lagerbolzens 23 erfolgt. Der Handhebel 18 ist über ein Gelenk 24 verschwenkbar in der Schwenkebene 9 an dem starren Zangenteil 22 gelagert, was hier durch einen an dem starren Zangenteil 22 befestigten Lagerbolzen 25 erfolgt. An dem Handhebel 18 ist über ein Gelenk 26 ein Endbereich eines Druckhebels 27 angelenkt, was hier durch einen an dem Handhebel 18 befestigten Lagerbolzen 28 erfolgt. In dem anderen Endbereich des Druckhebels 27 ist an diesem über ein Lager 29 verdrehbar in der Schwenkebene 9 eine Rolle 30 gelagert. Die Rolle 30 wälzt an einer Führungskontur 31 ab, welche einen (insbesondere ungefähr viertelkreisförmigen) Führungskonturabschnitt 32, einen (insbesondere ungefähr koaxial zur Abisolierachse 15 orientierten geradlinigen) Führungskonturabschnitt 33 sowie einen (insbesondere ungefähr parallel zur Längsachse des Druckhebels 27 orientierten) Führungskonturabschnitt 34 besitzt.

Ein Lagerbolzen 35, mit welchem das Gelenk 8 der Abisoliereinheit 5 gebildet ist, dient auch der gelenkigen Verbindung der Abisoliereinheit 5 mit einer Zuglasche 36. Die Zuglasche 36 verfügt lediglich über einen translatorischen Freiheitsgrad entlang der Abisolierachse 15. Dieser wird gewährleistet durch eine Führung der Zuglasche 36 einerseits durch ein Langloch 37 der Zuglasche 36, in welchem weitestgehend spielfrei quer zur Abisolierachse 15 der Lagerbolzen 23 geführt ist, sowie Durchtritt des dem Gelenk 8 abgewandten Endbereichs der Zuglasche 36 durch eine führende Ausnehmung 38 einer quer zur Abisolierachse 15 orientierten Wandung 39 des Handhebels 17. Der Abisolierhub mit einer Bewegung der Zuglasche 36 entlang der Abisolierachse 15 erfolgt unter Beaufschlagung einer Feder 40. Für das dargestellte Ausführungsbeispiel ist die Feder 40 als wendelartig gewundene Druckfeder ausgebildet, welche die Zuglasche 36 mit mehreren Gängen umschlingt und deren einer Federfußpunkt an der Wandung 39 abgestützt ist, während der andere Federfußpunkt an der Zuglasche 36 abgestützt ist, beispielsweise im Bereich eines Absatzes 41 der Zuglasche 36. An der Zuglasche 36 ist verdrehbar in der Schwenkebene 9 über ein Lager 42 eine Rolle 43 gelagert.

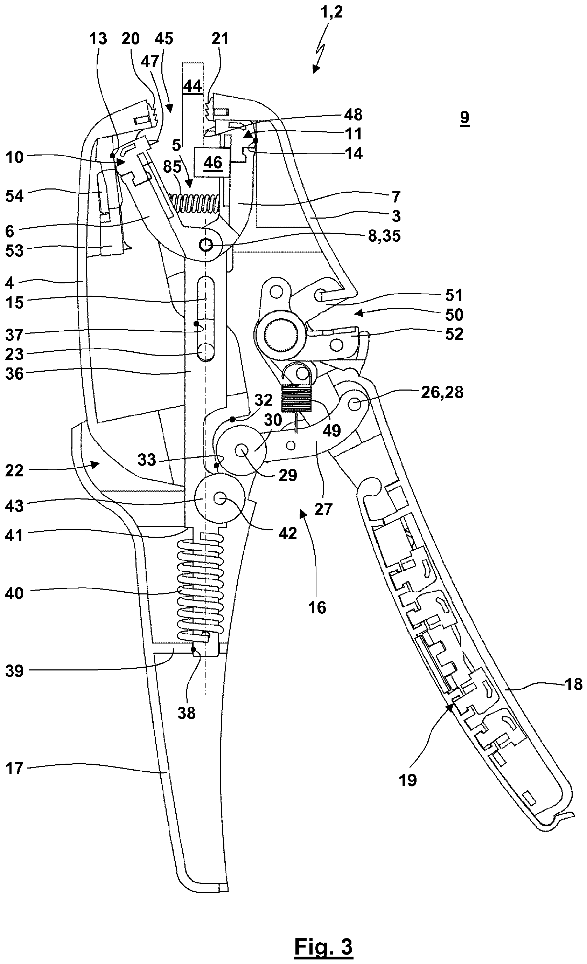

Im Folgenden wird ein Arbeitshub der Abisolierzange 2 anhand der Fig. 3 bis 6 erläutert:
**Fig. 3** zeigt die Abisolierzange 2 in einer Einführstellung. Ohne Applikation von Handkräften auf die Handhebel 17, 18 nehmen sowohl die Handhebel 17, 18 als auch die Zangenbacken 3, 4 als auch die Abisolierbacken 6, 7 die aus Fig. 3 ersichtliche Öffnungsstellung ein. Dies erfolgt durch eine auch in der Öffnungsstellung vorgespannte Feder 85, welche die Abisolierbacken 6, 7 und damit auch die Zangenbacken 3, 4 und die Handhebel 17, 18 in Öffnungsrichtung beaufschlagt. In dieser Einführstellung kann ein Kabel 44 in ein von den Zangenbacken 3, 4 und den Abisolierbacken 6, 7 mit daran befestigten Schneidelementen 10, 11 gebildetes Maul 45 der Abisolierzange 2 eingelegt werden. Hierbei trägt die Abisolierbacke 7 und/oder das Schneidelement 11 optional einen Abstandshalter 46, an welchen eine Stirnseite des Kabels 44 mit dem Einlegen in das Maul 45 zur Anlage gebracht wird, womit sich ein definierter Abstand von Messern 47, 48 der Schneidelemente 10, 11 von der Stirnseite des Kabels 44 ergibt.

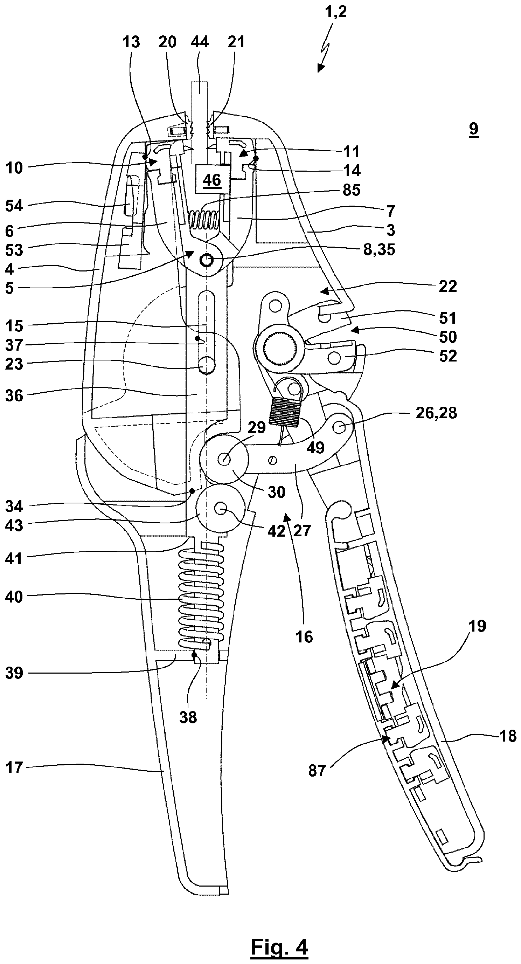

Ausgehend von dieser Einführstellung gemäß Fig. 3 wird ein Klemm- und Schneidhub ausgeführt durch Bewegung der Handhebel 17, 18 aufeinander zu, bis die Schneidstellung gemäß **Fig. 4** erreicht ist. Die Bewegung des Handhebels 18 in Richtung des Handhebels 17 während des Schneid- und Klemmhubs hat zur Folge, dass auch der Druckhebel 27 in Richtung der Führungskontur 31 bewegt wird. Während im Anfangsbereich des Führungskonturabschnitts 32 die Rolle 30 noch an der Führungskontur 31 abwälzen kann, ohne signifikante Kräfte auf die Zangenbacke 4 auszuüben, ändert sich die Neigung des Führungskonturabschnitts 32 mit zunehmender wälzender Bewegung der Rolle 30 entlang des Führungsabschnitts, womit eine sich vergrößernde Kraft von dem Druckhebel 27 auf die Zangenbacke 4 aufgebracht wird, so dass zunehmend eine Kraft auf die Zangenbacke 4 wirkt, welche auf eine Verschwenkung der Zangenbacke 4 in Richtung der Zangenbacke 3 gerichtet ist. Nach Schließung des Mauls 45 wirken der durch den Druckhebel 27 und die Rolle 30 an dem Führungskonturabschnitt 32 der Führungskontur 31 erzeugten Betätigungskraft einerseits die an den Klemmbacken 20, 21 hervorgerufene Klemmkraft für die Mantelfläche des Kabels 44 und andererseits die Schneid- und Anpresskraft der Messer 47, 48 der Abisoliereinheit 5 in einem Kräftegleichgewicht entgegen. Mit der Schneidstellung gemäß Fig. 4 erreicht die Rolle den Übergang zwischen den Führungskonturabschnitten 32, 33. In dieser Schneidstellung gemäß Fig. 4 liegt die Rolle 30 des Druckhebels 27 an der Rolle 43 der Zuglasche 36 an.

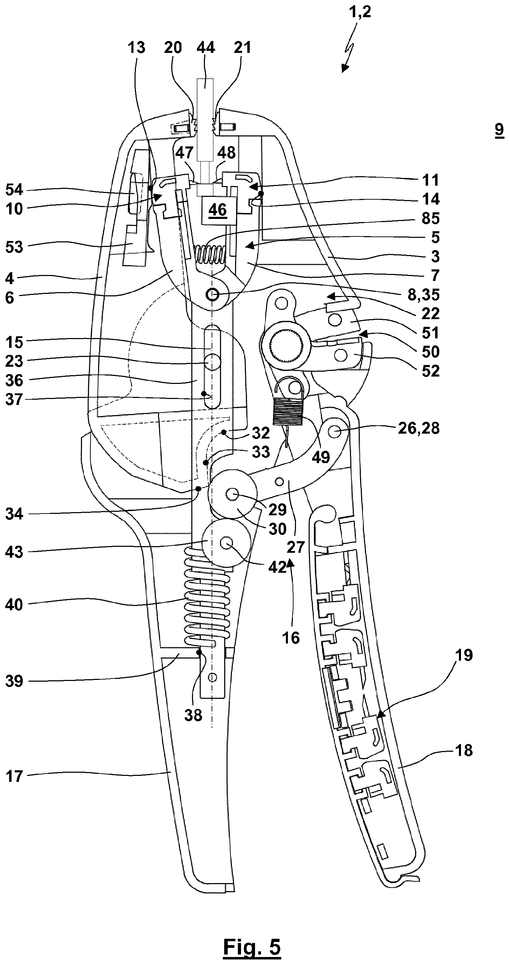

In der Schneidstellung gemäß Fig. 4 bildet die Verbindungsachse zwischen dem Gelenk 26 und dem Lager 29 des Druckhebels 27 einen Winkel zu der Abisolierachse 15 aus, welcher kleiner als 90° ist. Wird in einem anschließenden Abisolierhub zur Herbeiführung der abisolierten Stellung gemäß **Fig. 5** die auf den Handhebel 18 aufgebrachte Betätigungskraft weiter erhöht, führt die erläuterte Ausrichtung des Druckhebels 27 dazu, dass die in dem Druckhebel 27 wirkende Längskraft eine Kraftkomponente erzeugt, welche parallel zur Abisolierachse 15 orientiert ist und von der Rolle 30 über einen wälzenden Kontakt auf die Rolle 43 und damit auf die Zuglasche 36 übertragen wird. Diese Kraftkomponente bewirkt eine Verschiebung der Rolle 43 und der Zuglasche 36 unter zunehmender Beaufschlagung der Feder 40 entlang der Abisolierachse 15. Infolge der Ankopplung der Abisoliereinheit 5 im Bereich des Gelenks 8 geht dies einher mit einer Gleitbewegung der Abisoliereinheit 5 gegenüber den Zangenbacken 3, 4. Des Weiteren geht mit diesem Abisolierhub eine wälzende Bewegung der Rolle 30 entlang des Führungskonturabschnitts 33 einher, was wiederum eine zunehmende Verschwenkung des Druckhebels 27 mit einer Verkleinerung des Winkels der Verbindungsachse des Gelenks 26 und des Lagers 29 gegenüber der Abisolierachse zur Folge hat. Die Kraftverhältnisse für diesen Abisolierhub werden beeinflusst durch die Vorspannung und Steifigkeit der Feder 40 sowie die Reibverhältnisse für die gleitende Bewegung der Abisoliereinheit 5 gegenüber den Zangenbacken 3, 4 im Bereich der Kontaktflächen 13, 14. Zusätzlich kann zwecks Beeinflussung der Kraftverhältnisse auf den Druckhebel 27 eine weitere Feder 49 einwirken. Der erläuterte Abisolierhub hat zur Folge, dass für grundsätzlich im Bereich der Klemmbacken 20, 21 fixiertes Kabel 44 nach Durchtrennung der Isolierung durch die Messer 47, 48 in dem Schneidhub die Messer 47, 48 in geschlossenem Zustand relativ zu dem Kabel 44 bewegt werden, womit der endseitige freigeschnittene Axialbereich der Isolierung von dem Leiter heruntergezogen wird. Der maximale Abisolierhub ist vorgegeben durch die Länge des Führungskonturabschnitts 33. Fig. 5 zeigt die abisolierte Stellung. Für diese hat die Rolle 30 den Übergangsbereich zwischen den Führungskonturabschnitten 33, 34 erreicht.

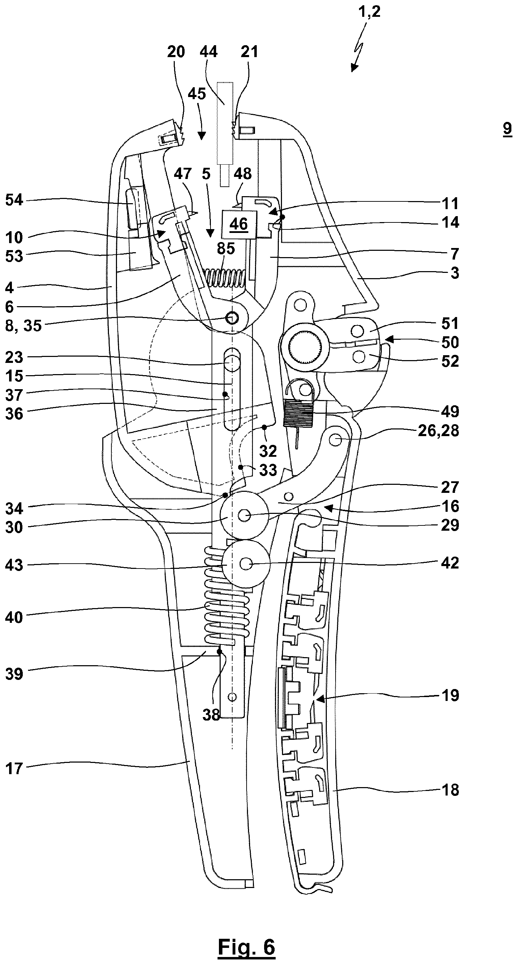

Mit weiterer Schließung der Handhebel 17, 18 kann dann die Rolle 30 an dem Führungskonturabschnitt 34 abwälzen, wobei dann vorzugsweise der Führungskonturabschnitt 34 ungefähr parallel zur Verbindungsachse des Gelenks 26 und des Lagers 29 orientiert ist. Dies hat einerseits zur Folge, dass ohne weitere signifikante Applikation von Handkräften auf die Handhebel 17, 18 die Handhebel 17, 18 weiter geschlossen werden können. Andererseits bildet die Rolle 30 dann kein Widerlager für die Zangenbacke 4 mehr, so dass die Feder 40 die Abisolierbacken 6, 7 und die Zangenbacken 3, 4 wieder in die Öffnungsstellung überführen kann. Hiermit ist eine Entnahmestellung gemäß **Fig. 6** erreicht, in welcher das abisolierte Kabel 44 aus dem nun wieder geöffneten Maul 45 entnommen werden kann und der Axialbereich der Isolierung aus dem Maul 45 herausfällt. Die Entnahmestellung gemäß Fig. 6 ist gleichzeitig eine Wechselstellung, auf welche im Folgenden noch näher eingegangen wird. Mit Erreichen der Entnahme- und Wechselstellung gemäß Fig. 6 ist der Arbeitshub der Abisolierzange 2 beendet.

Mit Beseitigung der auf die Handhebel 17, 18 aufgebrachten Handkräfte kehren (veranlasst durch die Federn 40, 39) die Handhebel 17, 18 wieder in die geöffnete Stellung zurück, womit wieder die Einführstellung gemäß Fig. 3 herbeigeführt ist und ein weiteres Kabel 44 mit der Abisolierzange 2 abisoliert werden kann.

Optional ist die Abisolierzange 2 mit einem weiteren Werkzeug, nämlich einer Schneideinrichtung 50, ausgestattet, welche ebenfalls über die Betätigung der Handhebel 17, 18 betätigt wird und welche über zwei Messer 51, 52 verfügt, mittels welchen mit Schließung der Handhebel 17, 18 ein in die Schneideinrichtung 50 eingelegtes Kabel vollständig durchtrennt werden kann (vgl. zur Ausgestaltung der Schneideinrichtung und zu deren getrieblicher Verbindung mit den Handhebeln auch den eingangs aufgeführten Stand der Technik).

Die Kontaktfläche 14 für eine Abisolierbacke 7 ist unmittelbar von der Zangenbacke 3 ausgebildet. Hingegen ist die Kontaktfläche 13 für die andere Abisolierbacke 6 von einem Abstützelement 53 ausgebildet, welches über ein Einstellelement 54 derart verlagerbar ist, dass je nach Position des Abstützelements 53 eine Veränderung des Schwenkwinkels der Abisolierbacken 6, 7 gegenüber dem Schwenkwinkel der Zangenbacken 3, 4 möglich ist. Somit kann über das Einstellelement 54 und die Vorgabe der Position des Abstützelements 53 vorgegeben werden, wie tief in der Schneidstellung die Messer 47, 48 in das Kabel 44 eindringen, um unterschiedlichen Dicken der Isolierung Rechnung tragen zu können. Für das dargestellte Ausführungsbeispiel erstreckt sich das Einstellelement 54 durch einen Führungsschlitz 55 der Zangenbacke 4, so dass diese von außen durch den Benutzer entlang des Führungsschlitzes 55 verschoben werden kann. Das Einstellelement 54 betätigt über gegenüber dem Führungsschlitz 55 geneigte Kontaktflächen in der Art eine Doppelkeil-Verbindung das Abstützelement 53.

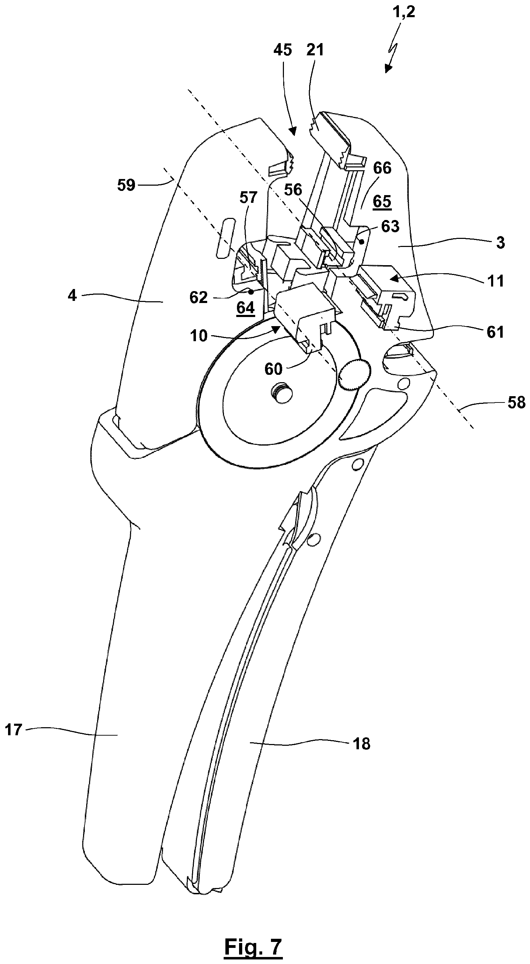

**Fig. 7** zeigt die Abisolierzange 2 in einer räumlichen Ansicht in der Entnahme- und Wechselstellung. Hier ist zu erkennen, dass die von dem Gelenk 8 weg weisenden Stirnseiten der Abisolierbacken 6, 7 jeweils mit Montagenuten 56, 57 ausgestattet sind. Die Längsachsen der Montagenuten 56, 57 bilden jeweils Montageachsen 58, 59. In Richtung der Montageachsen 58, 59 sind Montageelemente 60, 61 der Schneidelemente 10, 11 in die Montagenuten 56, 57 der Abisolierbacken 6, 7 einsetzbar. Die Montagenuten 56, 57 besitzen im Bereich des Boden Erweiterungen, womit Hinterschneidungen gebildet sind. Entsprechend sind die Montageelemente 60, 61 als Vorsprünge mit endseitigen Erweiterungen ausgebildet, welche in die Hinterschneidungen der Montagenuten 56, 57 eingreifen, womit ein Formschluss zur Aufnahme jedweder Kräfte in der Schwenkebene 9 gebildet ist. Eine Sicherung der Schneidelemente 10, 11 gegenüber den Abisolierbacken 6, 7 erfolgt grundsätzlich durch die Reibung zwischen den Montagenuten 56, 57 und den Montageelementen 60, 61. Vorzugsweise besitzen die Montagenuten 56, 57 sowie die Montageelemente 60, 61 jeweils einen in grober Näherung T-förmigen Querschnitt. Das formschlüssige Eingreifen des Montageelements 60, 61 in die Montagenut 56, 57 kann auch als eine Art Schwalbenschwanz-Verbindung 86 ausgebildet sein.

Das Schneidelement 10, 11 ist mit seinem Montageelement 60, 61 lediglich in der Wechselstellung gemäß Fig. 7 in die Montagenut 56, 57 einsetzbar, da in der Wechselstellung die Montagenut 56, 57 durch eine Ausnehmung oder einen Einschnitt 62, 63 einer parallel zur Schwenkebene 9 orientierten Seitenwandung 64, 65 der Zangenbacke 3, 4 zugänglich ist. Verlässt die Abisolierzange 2 die Wechselstellung gemäß Fig. 7, werden die Abisolierbacken 6, 7 mit den daran gehaltenen Schneidelementen 10, 11 gegenüber der Seitenwandung 64, 65 nach vorne geschoben, womit die Schneidelemente 10, 11 nicht mehr zugänglich sind. Vielmehr sind abseits der Wechselstellung die Schneidelemente 10, 11 zwischen den Seitenwandungen 64, 65 der Zangenbacken 3, 4 gefangen, so dass sich diese (abgesehen von einem etwaigen Spiel) außerhalb der Wechselstellung nicht unerwünscht entlang der Montageachsen 58, 59 bewegen können. Wie aus Fig. 7 ersichtlich ist, kann lediglich eine Seitenwandung einer Zangenbacke mit der Ausnehmung 62, 63 ausgestattet sein, durch welche dann die Montage und Demontage erfolgt, während die andere Seitenwandung derselben Zangenbacke nicht mit einer derartigen Ausnehmung ausgestattet ist. Die Seitenwandung 64, 65 bildet somit abseits der Wechselstellung ein Sicherungselement 66, welches das Schneidelement 10, 11 in Richtung der Montageachse 58, 59 blockiert.

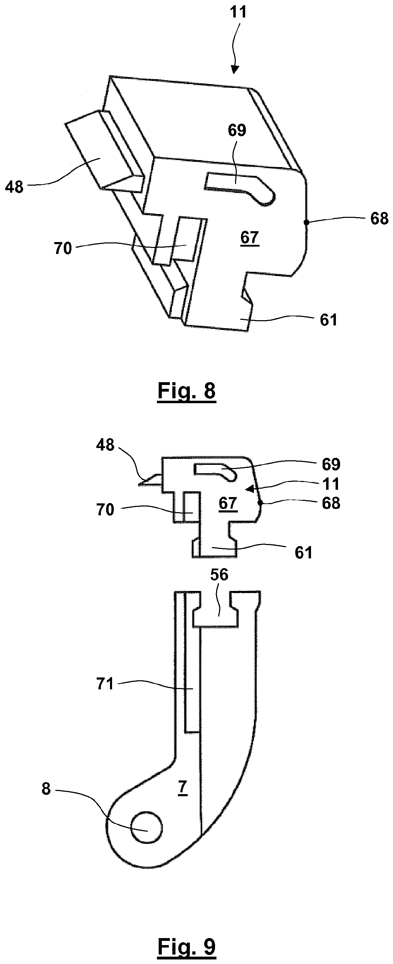

**Fig. 8** zeigt in einer räumlichen Darstellung beispielhaft das Schneidelement 11 (wobei für das andere Schneidelement 10 das Entsprechende gilt). Dieses ist beispielhaft mit einem Messer 48 mit geradlinig ausgebildeter Schneide gebildet, wobei durchaus abweichende Schneiden, beispielsweise mit mindestens einer konkaven Schneide oder auch zwei hintereinander angeordnete Messerblättern mit jeweils geradlinigen Schneiden, welche "V"-förmig angeordnet sind, oder auch lamellenartige Messer Einsatz finden können. Das Messer 48 ist umspritzt mit einem Haltekörper 67 aus Kunststoff. Der Haltekörper 67 bildet auf der dem Messer 48 abgewandten Seite eine Kontaktfläche 68 aus, mit welcher das Schneidelement 11 an einer zugeordneten Kontaktfläche 14 der Zangenbacke 3 abgestützt werden kann. Zu erkennen ist des Weiteren in Fig. 8 das mit einem Vorsprung mit T-förmiger Erweiterung im Endbereich ausgebildete Montageelement 61. Weiterhin können im Seitenbereich des Haltekörpers 67 Handhabungsflächen 69 vorgesehen sein, welche die manuelle Handhabung des Schneidelements 11 vereinfachen. Beispielsweise können die Handhabungsflächen 69 aufgeraut sein, um ein Greifen mit der Hand zu vereinfachen. Möglich ist, dass im Seitenbereich des Haltekörpers 67 eine Führungsnut 70 vorhanden ist, welche in Richtung der zugeordneten Abisolierbacke 7 offen ist.

**Fig. 9** zeigt eine Abisolierbacke 7 mit zugeordnetem Schneidelement 11 in demontiertem Zustand. Die Montageachse 58 ist hierbei vertikal zur Zeichenebene orientiert. Auch die Abisolierbacke 7 verfügt über eine Führungsnut 71. Mit Montage des Schneidelements 11 an der Abisolierbacke 7 ergänzen sich die Führungsnuten 70, 71 zu einer durchgehenden geradlinigen Führungsnut. Diese gemeinsam gebildete Führungsnut dient der Aufnahme des Abstandshalters 46, welcher auf der zu dem Maul 45 orientierten Seite die Abisolierbacke U-förmig umgreift, wobei endseitige Abwinklungen der Vertikalschenkel des U in die Führungsnuten 70, 71 eintreten. Der Abstandshalter 46 ist zur Veränderung der Länge des Axialbereichs der Isolierung, welcher zu entfernen ist, entlang der Führungsnuten 70, 71 verschiebbar. Ergänzend kann eine Rastierung oder anderweitige Fixierung einer eingestellten Position des Abstandshalters vorgesehen sein, welche hier nicht dargestellt ist (vgl. diesbezüglich bspw. DE 20 2008 014 111 U1). Möglich ist, dass der Abstandshalter 46 in demontiertem Zustand auf die Führungsnut 70 des Schneidelements 11 oder die Führungsnut 71 der Abisolierbacke 7 aufgesteckt wird und dann die Montage des Schneidelements 11 mit der Abisolierbacke 7 erfolgt, womit dann der Abstandshalter 46 in der mit den Führungsnuten 70, 71 gebildeten gemeinsamen Führungsnut verliersicher gefangen ist. Es versteht sich, dass die Abisolierbacke 6 und das Schneidelement 10 entsprechend ausgebildet sind, u. U. aber auch mit einer spiegelverkehrten Ausgestaltung. Die Schneidelemente 10, 11 für die beiden Abisolierbacken 6, 7 können aber auch identisch ausgebildet sein, wobei diese dann in umgekehrter Orientierung mit den unterschiedlichen Abisolierbacken 6, 7 montiert werden können.

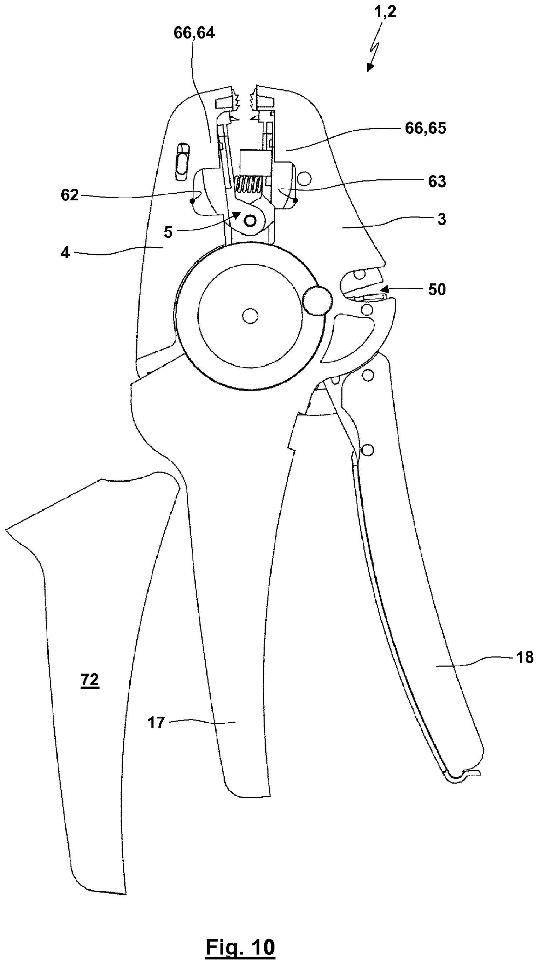

Wie aus **Fig. 10** ersichtlich ist, kann zumindest einer der Handhebel 17 mit einer Ummantelung 72 gebildet sein, welche auf einen Grundkörper des Handhebels 17 aufsteckbar, aufklebbar oder anderweitig mit diesem verbindbar ist. Über die Ummantelung 72 kann eine Vorgabe einer Elastizität erfolgen, um ein weiches Greifgefühl herbeizuführen. Möglich ist, dass mittels der Ummantelung 72, beispielsweise durch Form- und/oder Farbgebung, eine Individualisierung der Abisolierzange 2 für unterschiedliche Kunden erfolgt. Möglich ist darüber hinaus, dass über die Ummantelung 72 eine Anpassung an unterschiedliche Größen der Hände des Benutzers der Abisolierzange 2 erfolgt.

Wie insbesondere aus den Fig. 1 und 2 ersichtlich ist, ist der die Vorratseinrichtung 19 ausbildende Handhebel 18, bei welchem es sich insbesondere um den beweglichen Handhebel handelt, mit einem Grundkörper 73 gebildet, welcher der Aufbringung und Übertragung der Betätigungskräfte dient und somit über eine entsprechende Steifigkeit verfügt. Im Bereich der Vorratseinrichtung 19 ist der Grundkörper 73 im Querschnitt in grober Näherung U-förmig ausgebildet, wobei die Öffnung des U in Richtung des anderen Handhebels 17 orientiert ist. Der U-förmige Querschnitt des Grundkörpers 73 ist hier mit einem Grundschenkel 74 sowie zwei ungefähr parallel orientierten Seitenschenkeln 75, 76 gebildet. Von dem Grundköper 73 ist ein in Richtung des Handhebels 17 offener Innenraum 79 gebildet. In Richtung der Längsachse des Handhebels 18 ist der Innenraum 79 des Grundkörpers 73 begrenzt einerseits durch eine Wandung 77 sowie andererseits durch eine endseitige Wandung 78 des Handhebels 18. Der Innenraum 79 kann mittels eines Deckels 80 verschlossen werden. Der Deckel 80 ist in dem dem Zangenkopf der Abisolierzange 2 zugewandten Endbereich über ein Schwenklager 81 außerhalb des Innenraums 79 an dem Grundköper 73 angelenkt. Fig. 1 und 2 zeigen unterschiedliche Schwenkstellungen des Deckels 80, während Fig. 3 eine Schließstellung des Deckels 80 zeigt. Der Grundkörper 73 bildet im Bereich der in dem freien Endbereich des Handhebels 18 angeordneten Wandung 78 eine Rastnase 82 aus. In der Schließstellung des Deckels 80 gemäß Fig. 3 verrastet eine elastische Abwinklung 83 des Deckels 80 mit der Rastnase 82, womit die Schließstellung des Deckels 80 gegenüber einem unbeabsichtigten Öffnen gesichert ist. Auf der Innenseite des Deckels 80 sind Montagenuten 84 vorgesehen, welche vertikal zur Schwenkebene 9 und zu der Bewegungsebene der Handhebel 17, 18 sowie der Schwenkebene des Deckels 80 orientiert sind. In die Montagenuten 84 können für eine Auswechslung bevorratete Schneidelemente 10, 11 eingesetzt werden. Während die Schneidelemente 10, 11 für aufgeklappten Deckel 80 ohne weitere Maßnahmen aus den Montagenuten 84 ausgeschoben werden können, ist ein Austritt der Schneidelemente 10, 11 für geschlossene Deckel 80 nicht möglich, da der Austritt der Schneidelemente 10, 11 durch die die Seitenschenkel 75, 76 bildenden Wandungen des Grundkörpers 73 blockiert ist. Die Montagenuten 84 sind entsprechend den Montagenuten 56, 57 ausgebildet, so dass die Montageelemente 60, 61 der Schneidelemente 10, 11 genutzt werden können. Die Montagenuten 84 geben eine Montageachse 88 vor, welche quer zur Schwenkebene 9, in welcher die Handhebel 17, 18 verschwenkt werden, und senkrecht zur Zeichenebene gemäß Fig. 1 orientiert sind. In der Vorratseinrichtung 19 sind die Schneidelemente ebenfalls über Schwalbenschwanz-Verbindungen 87 gehalten. Ergänzend möglich ist die Bevorratung von Klemmbacken 20, 21 in der Vorratseinrichtung 19, wozu der Deckel 80 auf der Innenseite ebenfalls entsprechende Aufnahmen oder Montagenuten besitzen kann.

Für das dargestellte Ausführungsbeispiel sind die Abisolierbacken 6, 7 mit den Montagenuten 56, 57 ausgestattet, während die Schneidelemente 10, 11 mit den Montageelementen 60, 61 ausgestattet sind. Ebenfalls möglich ist, dass die Abisolierbacken 6, 7 die Montageelemente 60, 61 besitzen, während die Montagenuten 56, 57 an den Schneidelementen 10, 11 vorgesehen sind.

Im Rahmen der vorliegenden Erfindung umfasst eine "Wechselstellung", in welcher ausschließlich die Montage und Demontage der Schneidelemente 10, 11 möglich ist, sowohl eine diskrete Stellung als auch einen Stellungsbereich. Möglich ist auch, dass mehrere Wechselstellungen vorhanden sind.

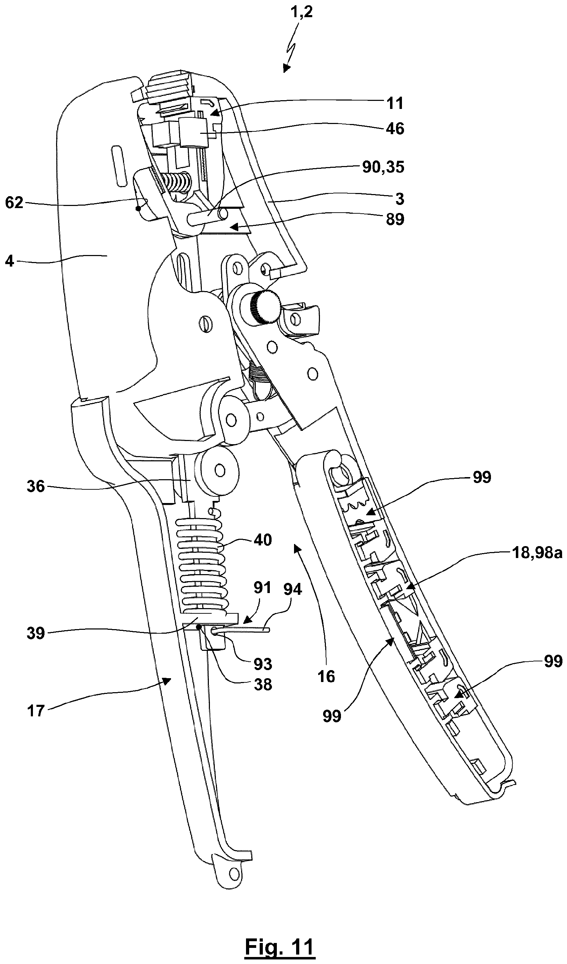

**Fig. 11** zeigt eine andere Ausführungsform einer Abisolierzange 2, welche bis auf Weiteres grundsätzlich entsprechend der Abisolierzange gemäß den Fig. 1 bis 10 ausgebildet sein kann. In Fig. 11 ist die Abisolierzange 2 teilgeschnitten dargestellt, wobei Teile der Handhebel 17, 18 sowie der Zangenbacke 3 weggeschnitten sind. Für dieses Ausführungsbeispiel kann die Betriebsstellung der Abisolierzange 2 nicht ausschließlich über den mit den Handhebeln 17, 18 gebildeten Antrieb 16, welcher der Aufbringung der Betätigungskräfte für die Bearbeitung des Werkstücks, insbesondere für das Einschneiden der Isolierung in dem Schneidhub und das Abisolieren in dem Abisolierhub, zuständig ist, verändert werden. Vielmehr ist eine manuelle Veränderung einer Betriebsstellung und insbesondere die Herbeiführung einer Wechselstellung auch über einen weiteren Antrieb 89 manuell möglich, welcher ohne Veränderung der Handhebel 17, 18 betätigbar ist und nicht für die Bearbeitung des Werkstücks genutzt wird. Der weitere Antrieb 89 ist mit einem manuellen Betätigungsorgan 90 gebildet. Für das dargestellte Ausführungsbeispiel ist das Betätigungsorgan 90 mit dem Lagerbolzen 35 gebildet, welcher hier über einen nicht dargestellten Schlitz aus einem Gehäuse der Abisolierzange 2 herausgeführt oder frei von außen zugänglich ist. Möglich ist, dass das Betätigungsorgan 90 mit einem Schlitz in einem dem starren Zangenteil 22 zugeordneten Gehäuse entlang der Abisolierachse 15 geführt ist. Wird in der in Fig. 11 dargestellten Einführstellung der Abisolierzange 2 das Betätigungsorgan 90 manuell in Richtung der Abisolierachse 15 verschoben, führt dies zu einer Verschiebung der Zuglasche 36 entlang der Abisolierachse 15, wobei die manuell aufgebrachten Kräfte ausreichend sein müssen, um die Kraft der Feder 40 zu überwinden. Während die Zangenbacken 3, 4, der Druckhebel 27 und die Handhebel 17, 18 während dieser Betätigung des Antriebs 89 ihre Stellung beibehalten können, führt die Bewegung der Zuglasche 36 infolge der Kopplung über das Gelenk 8 auch zu einer Bewegung der Abisoliereinheit 5 entlang der Abisolierachse 15. Es kommt somit zu einer Relativverschiebung der Abisolierbacken 6, 7 und der daran montierten Schneidelemente 10, 11 gegenüber den Zangenbacken 3, 4, bis die Schneidelemente 10, 11 im Bereich der Ausnehmungen 62, 63 der Seitenwandungen 64, 65 der Zangenbacken 3, 4 angeordnet sind, womit eine Wechselstellung erreicht ist, in welcher die Schneidelemente 10, 11 entlang der Montageachse 58, 59 demontiert werden können und neue Schneidelemente 10a, 10b montiert werden können.

Möglich ist, dass zur Beibehaltung einer derart herbeigeführten Wechselstellung weiterhin das Betätigungsorgan 90 manuell beaufschlagt werden muss, damit die Feder 40 nicht eine Bewegung aus der Wechselstellung heraus verursacht. Möglich ist aber auch, dass in der derart herbeigeführten Wechselstellung eine Rast- oder Verriegelungseinrichtung 91 wirksam wird, welche die Wechselstellung sichert. Hierbei kann die Rast- oder Verriegelungseinrichtung 91 ein beliebiges Bauelement verrasten oder verriegeln, welches zur Herbeiführung der Wechselstellung bewegt wird. Findet eine Rasteinrichtung Einsatz, kann diese eine Rastkraft erzeugen, welche größer ist als die von der Feder 40 hervorgerufene Kraft. Die Überwindung der Rastkraft erfolgt dann, indem die Kraft der Feder 40 ergänzt wird durch manuell auf das Betätigungsorgan 90 aufgebrachten Lösekräfte, welche von der Wechselstellung weg gerichtet sind. Für den Fall, dass eine Verriegelungseinrichtung Einsatz findet, kann eine verriegelte Stellung verlassen werden durch manuelle Beseitigung eines Verriegelungselements.

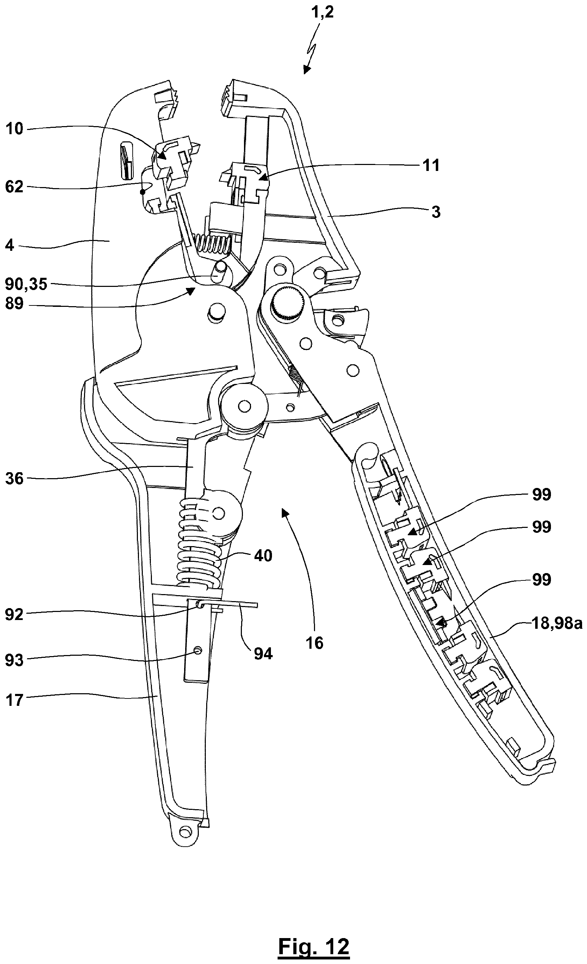

Die **Fig. 11** **und** **12** zeigen lediglich ein Ausführungsbeispiel einer Rast- oder Verriegelungseinrichtung 91, ohne dass die Erfindung auf dieser Ausführungsform eingeschränkt sein soll. Hier ist die Zuglasche 36 in dem Endbereich, welcher die Ausnehmung 38 der Wandung 39 des Handhebels 17 durchsetzt, mit zwei axial beabstandeten Bohrungen 92, 93 ausgestattet. Mittels eines in die Bohrungen 92, 93 einsetzbaren Verriegelungselements 94, hier ein Drahtbügel, können unterschiedliche axiale Positionen der Zuglasche 36 gesichert werden, wobei für das dargestellte Ausführungsbeispiel mit dem Einsetzen des Verriegelungselements 94 in die Bohrung 92 gemäß Fig. 12 eine formschlüssige Sicherung und damit Verriegelung der Wechselstellung möglich ist. Wie ebenfalls aus Fig. 12 ersichtlich ist, ist durch Betätigung des Antriebs 89 eine Entnahme der Schneidelemente 10, 11 auch in der Einführstellung der Zangenbacken 3, 4 und Handhebel 17, 18 möglich, so dass alternativ ein Auswechseln in der Einführstellung und in der Entnahmestellung möglich ist.

Möglich ist aber auch, dass das Auswechseln nur in einer durch den Antrieb 89 herbeigeführten Wechselstellung möglich ist, wobei dann auch eine Entnahmestellung gänzlich entfallen kann und die Entnahme in der Einführstellung erfolgen kann.

Erfindungsgemäß findet eine von zumindest einem der Antriebe 16, 89 bewegungsgesteuerte Freigabe der Schneidelemente 10, 11 Einsatz.

Möglich ist, dass in der Vorratseinrichtung 19 auch für eine Auswechslung bestimmte Schneidelemente 51, 52 der Schneideinrichtung 50 bevorratet werden.

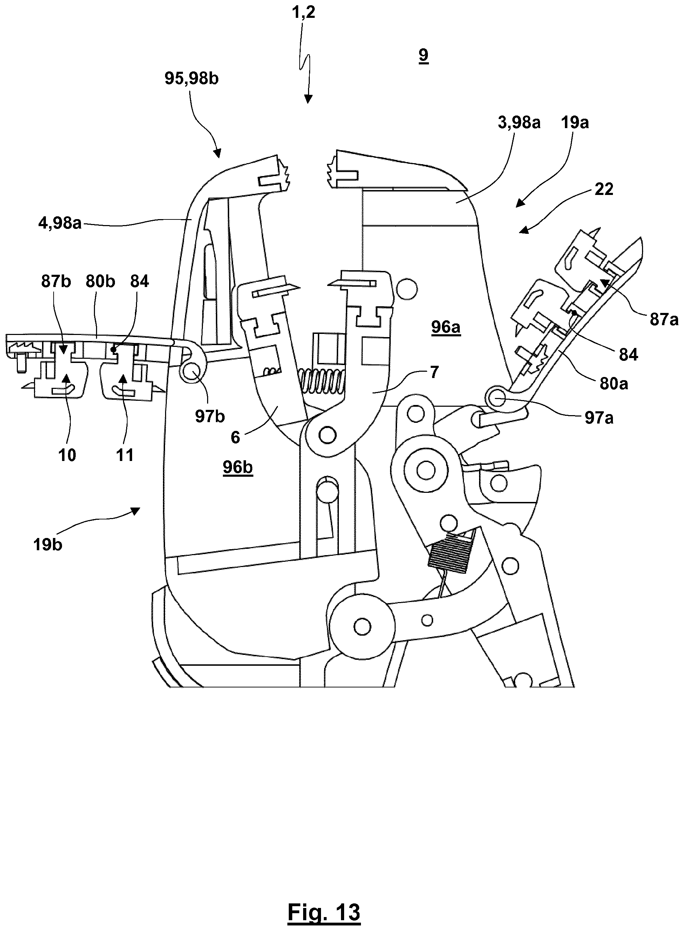

Alternativ oder kumulativ zu der Integration einer Vorrichtungseinrichtung 19 in einen Handhebel 18 kann auch eine Vorratseinrichtung 19 in einen Zangenkopf 95 integriert sein. Für das dargestellte Ausführungsbeispiel gemäß **Fig. 13** sind Vorratseinrichtungen 19a und 19b in den Zangenkopf 95 integriert. Hierbei ist die Vorratseinrichtung 19a in das starre Zangenteil 22 integriert, hier in die Zangenbacke 3. Hingegen ist die Vorratseinrichtung 19b in die bewegliche Zangenbacke 4 integriert. Hierbei besitzen die Backe 3 und 4 jeweils eine Ausnehmung 96a, 96b, welche durch einen Deckel 80a, 80b (zumindest teilweise) geschlossen werden können.

Für das dargestellte Ausführungsbeispiel sind die Deckel 80a, 80b verschwenkbar an den Zangenbacken 3, 4 angelenkt im Bereich eines Gelenks 97a, 97b, wobei die Schwenkachse des Gelenks 97a, 97b vertikal zur Zeichenebene gemäß Fig. 13 und zu der Schwenkebene 9 der Zangenbacken 3, 4 orientiert ist. An den Deckeln 80a, 80b sind Zubehörteile wie die Schneidelemente 10, 11, die Klemmbacken 20, 21 und/oder Messer 51, 52, lösbar gehalten, wie dies zuvor auch für die Vorratseinrichtung 19, welche im Bereich des Handhebels 18 angeordnet ist, beschrieben worden ist. Vorzugsweise sind diese Zubehörteile über eine Schwalbenschwanz-Verbindung 87a, 87b an dem Deckel 80a, 80b gehalten. Die Deckel 80a, 80b können zu diesem Zweck Hinterschneidungen aufweisende Montagenuten 84 besitzen, deren Längsachsen eine Montageachse 88 vorgeben, welche vertikal zur Schwenkebene 9 der Zangenbacken 3, 4 orientiert sind. Es versteht sich, dass von den beiden Vorratseinrichtungen 19a, 19b auch nur eine Vorratseinrichtung an einem Zangenkopf vorgesehen sein kann.

Für das dargestellte Ausführungsbeispiel ist die Ausnehmung 96a der Vorratseinrichtung 19a zwischen dem vorderen Endbereich der Zangenbacke 3, an welchem die Klemmbacke 21 gehalten ist, und dem Gelenk 24 angeordnet. Zumindest teilweise erstreckt sich die Ausnehmung 96a seitlich der gegenüber der Zangenbacke 3 verschieblich geführten Abisolierbacke 7. Vorzugsweise bildet eine in Fig. 13 nicht dargestellte Wandung einerseits den Boden der Ausnehmung 96a und andererseits stellt diese Wandung eine Gleitfläche zwecks Gleitführung der Abisolierbacke 7 gegenüber der Zangenbacke 3 bereit. Hingegen ist die Vorratseinrichtung 19b ungefähr im Bereich des Gelenks 12, nämlich seitlich von diesem, angeordnet.

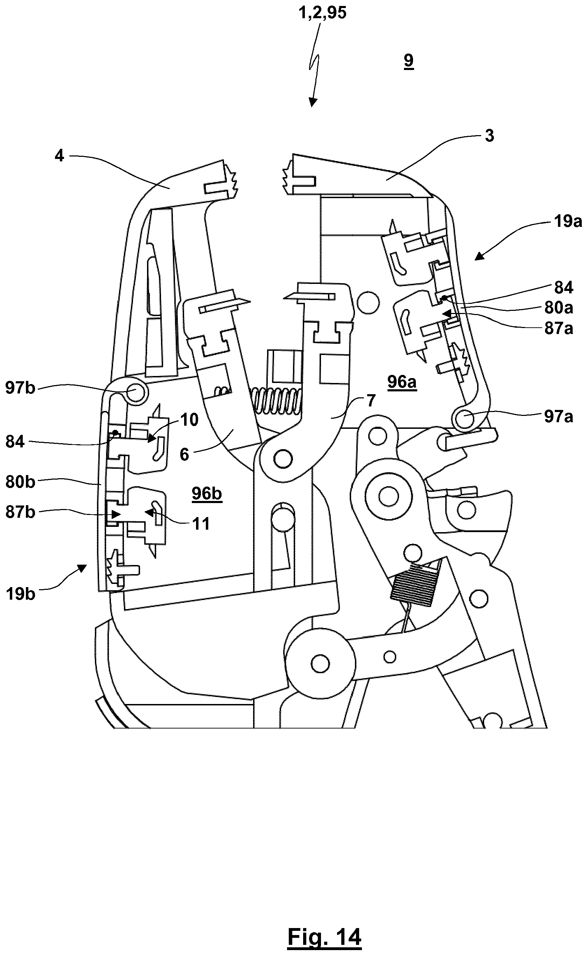

Die Deckel 80a, 80b können in der geschlossenen Stellung gemäß **Fig. 14** mit den Zangenbacken 3, 4 verrastet, verriegelt oder anderweitig gesichert werden, ohne dass dies im Detail in den Fig. 13, 14 dargestellt ist. Möglich ist auch, dass
- die Deckel 80a, 80b nicht verschwenkbar an den Zangenbacken 3, 4 gelagert sind, sondern abnehmbar sind,
- die Zubehörteile nicht an dem Deckel, sondern an den Zangenbacken 3, 4 in den Innenräumen 96a, 96b gehalten sind und/oder
- die Deckel 80a, 80b in eine andere Richtung (beispielsweise um eine Schwenkachse, welche in der Zeichenebene gemäß Fig. 13 und 14 liegt) verschwenkbar sind oder in eine andere Richtung abnehmbar oder montierbar sind.

Die Vorratseinrichtung 19, 19a, 19b sind jeweils in einem Zangenteil 98 gebildet, wobei dieses vorzugsweise als Handhebel 18, als Zangenbacke 3, 4 oder Zangenkopf 95 ausgebildet ist. Die Vorratseinrichtung 19 dient der Bevorratung mindestens eines beliebigen Zubehörteils 99 oder unterschiedlicher Zubehörteile, bei welchem oder welchen es sich beispielsweise um ein Schneidelement 10, 11, eine Klemmbacke 20, 21, ein Messer 51, 52 und/oder ein Pressgesenk für eine Presszange handeln kann.

### BEZUGSZEICHENLISTE

- 1: Abisolierwerkzeug
- 2: Abisolierzange
- 3: Zangenbacke (fest)
- 4: Zangenbacke (bewegbar)
- 5: Abisoliereinheit
- 6: Abisolierbacke
- 7: Abisolierbacke
- 8: Gelenk
- 9: Schwenkebene
- 10: Schneidelement
- 11: Schneidelement
- 12: Gelenk
- 13: Kontaktfläche
- 14: Kontaktfläche
- 15: Abisolierachse
- 16: Antrieb
- 17: Handhebel (fest)
- 18: Handhebel (bewegbar)
- 19: Vorratseinrichtung
- 20: Klemmbacke
- 21: Klemmbacke
- 22: starres Zangenteil
- 23: Lagerbolzen
- 24: Gelenk
- 25: Lagerbolzen
- 26: Gelenk
- 27: Druckhebel
- 28: Lagerbolzen
- 29: Lager
- 30: Rolle
- 31: Führungskontur
- 32: Führungskonturabschnitt
- 33: Führungskonturabschnitt
- 34: Führungskonturabschnitt
- 35: Lagerbolzen
- 36: Zuglasche
- 37: Langloch
- 38: Ausnehmung
- 39: Wandung
- 40: Feder
- 41: Absatz
- 42: Lager
- 43: Rolle
- 44: Kabel
- 45: Maul
- 46: Abstandshalter
- 47: Messer
- 48: Messer
- 49: Feder
- 50: Schneideinrichtung
- 51: Messer
- 52: Messer
- 53: Abstützelement
- 54: Einstellelement
- 55: Führungsschlitz
- 56: Montagenut
- 57: Montagenut
- 58: Montageachse
- 59: Montageachse
- 60: Montageelement
- 61: Montageelement
- 62: Ausnehmung
- 63: Ausnehmung
- 64: Seitenwandung
- 65: Seitenwandung
- 66: Sicherungselement
- 67: Haltekörper
- 68: Kontaktfläche
- 69: Handhabungsfläche
- 70: Führungsnut
- 71: Führungsnut
- 72: Ummantelung
- 73: Grundkörper
- 74: Grundschenkel
- 75: Seitenschenkel
- 76: Seitenschenkel
- 77: Wandung
- 78: Wandung
- 79: Innenraum
- 80: Deckel
- 81: Schwenklager
- 82: Rastnase
- 83: Abwinklung
- 84: Montagenut
- 85: Feder
- 86: Schwalbenschwanz-Verbindung
- 87: Schwalbenschwanz-Verbindung
- 88: Montageachse
- 89: Antrieb
- 90: Betätigungsorgan
- 91: Rast- oder Verriegelungseinrichtung
- 92: Bohrung
- 93: Bohrung
- 94: Verriegelungselement
- 95: Zangenkopf
- 96: Ausnehmung
- 97: Gelenk
- 98: Zangenteil
- 99: Zubehörteil

## Patentansprüche

1. Abisolierwerkzeug (1) mit einer mit zwei Abisolierbacken (6, 7) gebildeten Abisoliereinheit (5), wobei an mindestens einer Abisolierbacke (6, 7) ein entlang einer Montageachse (58, 59) mit der Abisolierbacke (6, 7) montiertes Schneidelement (10, 11) auswechselbar gehalten ist, und mit einem Antrieb (16), wobei durch den Antrieb (16) in einem Schneidhub die beiden Abisolierbacken (6, 7) in einer Schwenkebene (9) aufeinander zu verschwenkbar sind, durch den Antrieb (16) die beiden Abisolierbacken (6, 7) in einem auf den Schneidhub folgenden Abisolierhub entlang einer Abisolierachse (15) bewegbar sind und die Montageachse (58, 59) vertikal zu der Schwenkebene (9) und/oder zu der Abisolierachse (15) orientiert ist, **dadurch gekennzeichnet, dass** durch den Antrieb (16) des Abisolierwerkzeugs (1) oder einen weiteren Antrieb (89) des Abisolierwerkzeugs (1) eine Wechselstellung herbeiführbar ist, in welcher das Schneidelement (10, 11) zur Montage und Demontage des Schneidelements (10, 11) freigegeben ist hinsichtlich einer Bewegung entlang der Montageachse (58, 59), wobei eine Herbeiführung der Wechselstellung bewegungsgesteuert durch Bewegung der Abisoliereinheit (5) durch den Antrieb (16) oder den weiteren Antrieb (89) entlang der Abisolierachse (15) erfolgt.

2. Abisolierwerkzeug (1) nach Anspruch 1, **dadurch gekennzeichnet, dass** das Schneidelement (10, 11) über einen formschlüssigen Eingriff eines Montageelements (60, 61) in eine entlang der Montageachse (58, 59) orientierte Montagenut (56, 57) auswechselbar an der Abisolierbacke (6, 7) gehalten ist.

3. Abisolierwerkzeug (1) nach einem der vorhergehenden Ansprüche, **dadurch gekennzeichnet, dass**
a) die Abisolierbacke (6, 7) die Montagenut (56, 57) besitzt und
b) das Schneidelement (10, 11) das Montageelement (60, 61) besitzt.

4. Abisolierwerkzeug (1) nach einem der vorhergehenden Ansprüche, **dadurch gekennzeichnet, dass** das Schneidelement (10, 11) mit
a) einem Messer (47, 48) und
b) einem Haltekörper (67),
ba) an welchem das Messer (47, 48) gehalten ist und
bb) welcher die Montagenut (56, 57) oder das Montageelement (60, 61) ausbildet, gebildet ist.

5. Abisolierwerkzeug (1) nach einem der vorhergehenden Ansprüche, **dadurch gekennzeichnet, dass** die Wechselstellung am Ende eines Arbeitshubs des Abisolierwerkzeugs (1) angeordnet ist.

6. Abisolierwerkzeug (1) nach einem der vorhergehenden Ansprüche, **dadurch gekennzeichnet, dass** die Wechselstellung gleichzeitig als Entnahmestellung für das abisolierte Werkstück ausgebildet ist.

7. Abisolierwerkzeug (1) nach einem der vorhergehenden Ansprüche, **dadurch gekennzeichnet, dass**
a) das Schneidelement (10, 11) abseits der Wechselstellung in Richtung der Montageachse (58. 59) durch ein Sicherungselement (66) blockiert ist,
b) in der Wechselstellung das Sicherungselement (66) von dem Schneidelement (10, 11) wegbewegt ist, so dass das Schneidelement (10, 11) durch das Sicherungselement (66) nicht mehr blockiert ist und damit freigegeben ist.

8. Abisolierwerkzeug (1) nach einem der vorhergehenden Ansprüche, **dadurch gekennzeichnet, dass** das Abisolierwerkzeug (1)
a) eine Einlegestellung, in welcher das Werkstück in das Abisolierwerkzeug (1) eingelegt wird,
b) eine Klemmstellung, in welcher das Werkstück zwischen Klemmbacken (20, 21) des Abisolierwerkzeugs (1) geklemmt wird, und/oder eine Schneidstellung, in welcher das Werkstück durch das Schneidelement (10, 11) eingeschnitten ist, und
c) eine Entnahmestellung, in welcher das Werkstück aus dem Abisolierwerkzeug (1) entnommen werden kann,
besitzt, wobei die Einlegestellung, die Klemmstellung und/oder die Schneidstellung und die abisolierte Stellung in dieser Reihenfolge über den Arbeitshub des Abisolierwerkzeugs (1) hintereinanderliegend angeordnet sind.

9. Abisolierwerkzeug (1) nach einem der vorhergehenden Ansprüche, **dadurch gekennzeichnet, dass** das Abisolierwerkzeug (1) eine Vorratseinrichtung (19) für die Bevorratung mindestens eines Schneidelements (10, 11; 51, 52) und/oder mindestens eines Klemmelements (20, 21) besitzt.

10. Abisolierwerkzeug (1) nach Anspruch 9, **dadurch gekennzeichnet, dass** die Vorratseinrichtung (19) im Bereich eines Handhebels (18), eines Zangenkopfes (95) oder einer Zangenbacke (3, 4) des Abisolierwerkzeugs (1) angeordnet ist.

11. Abisolierwerkzeug (1) nach Anspruch 10, **dadurch gekennzeichnet, dass** ein Grundkörper (73) des Handhebels (18) einen offenen Querschnitt besitzt, welcher durch einen Deckel (80) zumindest teilweise verschließbar ist, und das Schneidelement (10, 11) und/oder das Klemmelement (20, 21) in einem Innenraum (79) des Handhebels (18) angeordnet sind/ist, der von dem Deckel (80) und dem offenen Querschnitt des Grundkörpers (73) begrenzt ist.

12. Abisolierwerkzeug (1) nach Anspruch 11, **dadurch gekennzeichnet, dass** das Schneidelement (10, 11) und/oder das Klemmelement (20, 21) an dem Deckel (80) gehalten sind/ist.

13. Abisolierwerkzeug (1) nach Anspruch 11 oder 12, **dadurch gekennzeichnet, dass** der Deckel (80) auf der einem anderen Handhebel (17) zugewandten Seite des Grundkörpers (73) angeordnet ist.

14. Abisolierwerkzeug (1) nach einem der Ansprüche 12 bis 13, **dadurch gekennzeichnet, dass** der Deckel (80) verschwenkbar an dem Grundkörper (73) des Handhebels (18) gelagert ist.

15. Abisolierwerkzeug (1) nach Anspruch 14, **dadurch gekennzeichnet, dass** der Deckel (80) in seinem einem Zangenkopf zugewandten Endbereich des Deckels (80) an dem Grundkörper (73) gelagert ist.

16. Abisolierwerkzeug (1) nach einem der Ansprüche 11 bis 15, **dadurch gekennzeichnet, dass** der Deckel (80) in einer Schließstellung mit dem Grundkörper (73) des Handhebels (18) verrastet oder verriegelt ist.

17. Abisolierwerkzeug (1) nach einem der Ansprüche 1 bis 16, **dadurch gekennzeichnet, dass** das Schneidelement (10, 11) integral mit
a) einem Messer (47, 48) und
b) einem Haltekörper (67),
ba) an welchem stoffschlüssig das Messer (47, 48) gehalten ist und
bb) welcher eine Montagenut (56, 57) oder ein Montageelement (60, 61) für die auswechselbare Befestigung des Schneidelements (10, 11) an einer Abisolierbacke (6, 7) ausbildet,
gebildet ist.

18. Abisolierwerkzeug (1) nach Anspruch 17, **dadurch gekennzeichnet, dass** das Schneidelement (10, 11) ein Führungs- oder Halteorgan (70) für einen Abstandshalter (46) besitzt.

## Claims

1. Stripping tool (1) comprising a stripping unit (5) with two stripping jaws (6, 7), a cutting element (10, 11) being held exchangeably at at least one stripping jaw (6, 7), the cutting element (10, 11) being assembled to the stripping jaw (6, 7) along an assembly axis (58, 59), and comprising a drive (16), the two stripping jaws (6, 7) being pivotable towards each other by the drive (16) over a cutting stroke in a pivoting plane (9) and the two stripping jaws (6, 7) being moveable by the drive along a stripping axis (15) in a stripping stroke following to the cutting stroke and the assembly axis (58, 59) having an orientation vertical to the pivoting plane (9) and/or to the stripping axis (15), **characterised in that** it is possible to induce an exchange position by the drive (16) of the stripping tool (1) or by another drive (89) of the stripping tool (1) wherein for an assembly and disassembly of the cutting element (10, 11) the cutting element (10, 11) is released for a movement along the assembly axis (58, 59), the exchange position being induced on the basis of a control by motion by a movement of the stripping unit (5) by the drive (16) or the other drive (89) along the stripping axis (15).

2. Stripping tool (1) of claim 1, **characterised in that** the cutting element (10, 11) is exchangeably held at the stripping jaw (6, 7) by a form locking engagement of an assembly element (60, 61) into an assembly groove (56, 57) having an orientation along the assembly axis (58, 59).

3. Stripping tool (1) of one of the preceding claims, **characterised in that**
a) the stripping jaw (6, 7) comprises an assembly groove (56, 57) and
b) the cutting element (10, 11) comprises the assembly element (60, 61).

4. Stripping tool (1) of one of the preceding claims, **characterised in that** the cutting element (10, 11) comprises
a) a blade (47, 48) and
b) a holding body (67),
ba) at which the blade (47, 48) is held and
bb) which forms the assembly groove (56, 57) or the assembly element (60, 61).

5. Stripping tool (1) of one of the preceding claims, **characterised in that** the exchange position is positioned at the end of a working stroke of the stripping tool (1).

6. Stripping tool (1) of one of the preceding claims, **characterised in that** the exchange position also is a removal position for the stripped work piece.

7. Stripping tool (1) of one of the preceding claims, **characterised in that**
a) remote from the exchange position the cutting element (10, 11) is blocked in the direction of the assembly axis (58, 59) by a securing element (66),
b) in the exchange position the securing element (66) has been moved away from the cutting element (10, 11) so that the cutting element (10, 11) is no longer blocked by the securing element (66) and released in this way.

8. Stripping tool (1) of one of the preceding claims, **characterised in that** the stripping tool (1) comprises
a) an insertion position wherein the work piece is inserted into the stripping tool (1),
b) a clamping position wherein the work piece is clamped between clamping jaws (20, 21) of the stripping tool (1) and/or a cutting position wherein the work piece is cut by the cutting element (10, 11) and
c) a removal position wherein it is possible to remove the work piece from the stripping tool (1),
the insertion position, the clamping position and/or the cutting position and the stripped position are arranged one behind the other in this order along the working stroke of the stripping tool (1).

9. Stripping tool (1) of one of the preceding claims, **characterised in that** the stripping tool (1) comprises a storage device (19) for storing at least one cutting element (10, 11; 51, 52) and/or at least one clamping element (20, 21).

10. Stripping tool (1) of claim 9, **characterised in that** the storage device (19) is arranged in the region of a hand lever (18), a pliers head (95) or a pliers jaw (3, 4) of the stripping tool (1).

11. Stripping tool (1) of claim 10, **characterised in that** a base body (73) of the hand lever (18) comprises an open cross section which is at least partially closable by a lid and that the cutting element (10, 11) and/or the clamping element (20, 21) are/is arranged in an inner chamber (79) of the hand lever (18) which is delimited by the lid (80) and the open cross section of the base body (73).

12. Stripping tool (1) of claim 11, **characterised in that** the cutting element (10, 11) and/or the clamping element (20, 21) are/is held at the lid (80).

13. Stripping tool (1) of claim 11 or 12, **characterised in that** the lid (80) is arranged on the side of the base body (73) facing towards the other hand lever (17).

14. Stripping tool (1) of one of claims 12 to 13, **characterised in that** the lid (80) is supported for being pivoted at the base body (73) of the hand lever (18).

15. Stripping tool (1) of claim 14, **characterised in that** the lid (80) is supported for being pivoted at the base body (73) in the end region of the lid (80) facing towards the pliers head.

16. Stripping tool (1) of one of claims 11 to 15, **characterised in that** in a closed position the lid (80) is latched or locked with the base body (73) of the hand lever (18).

17. Stripping tool (1) of one of claims 1 to 16, **characterised in that** the cutting element (10, 11) integrally comprises
a) a blade (47, 48) and
b) a holding body (67),
ba) at which the blade (47, 48) is held by a material bond and
bb) which comprises an assembly groove (56, 57) or an assembly element (60, 61) for the exchangeable fixation of the cutting element (10, 11) at a stripping jaw (6, 7).

18. Stripping tool (1) of claim 17, **characterised in that** the cutting element (10, 11) comprises a guiding or holding means (70) for a distance element (46).

## Revendications

1. Outil de dénudage (1) avec une unité de dénudage (5) constituée de deux mâchoires de dénudage (6, 7), un élément de coupe (10, 11) monté le long d'un axe de montage (58, 59) avec la mâchoire de dénudage (6, 7) étant maintenu de manière interchangeable au niveau d'au moins une mâchoire de dénudage (6, 7), et un dispositif d'entraînement (16), les deux mâchoires de dénudage (6, 7) pouvant pivoter l'une vers l'autre dans un plan de pivotement (9) dans une course de coupe grâce au dispositif d'entraînement (16), les deux mâchoires de dénudage (6, 7) pouvant être déplacées par le dispositif d'entraînement (16) dans une course de dénudage suivant la course de coupe le long d'un axe de dénudage (15) et l'axe de montage (58, 59) étant orienté verticalement par rapport au plan de pivotement (9) et/ou à l'axe de dénudage (15), **caractérisé en ce que** le dispositif d'entraînement (16) de l'outil de dénudage (1) ou un autre dispositif d'entraînement (89) de l'outil de dénudage (1) peut prendre une position de changement dans laquelle l'élément de coupe (10, 11) est déverrouillé pour le montage et le démontage de l'élément de coupe (10, 11) en ce qui concerne un déplacement le long de l'axe de montage (58, 59), la réalisation de la position de changement ayant lieu avec un contrôle du mouvement par le déplacement de l'unité de dénudage (5) par le dispositif d'entraînement (16) ou l'autre dispositif d'entraînement (89) le long de l'axe de dénudage (15).

2. Outil de dénudage (1) selon la revendication 1, **caractérisé en ce que** l'élément de coupe (10, 11) est maintenu, par l'intermédiaire d'un emboîtement par complémentarité de forme d'un élément de montage (60, 61) dans une rainure de montage (56, 57) orientée le long de l'axe de montage (58, 59) de manière interchangeable au niveau de la mâchoire de dénudage (6, 7).

3. Outil de dénudage (1) selon l'une des revendications précédentes, **caractérisé en ce que**
a) la mâchoire de dénudage (6, 7) comprend la rainure de montage (56, 57) et
b) l'élément de coupe (10, 11) comprend l'élément de montage (60, 61).

4. Outil de dénudage (1) selon l'une des revendications précédentes, **caractérisé en ce que** l'élément de coupe (10, 11) est constitué
a) d'un couteau (47, 48) et
b) d'un corps de maintien (67),
ba) sur lequel le couteau (47, 48) est maintenu et
bb) qui forme la rainure de montage (56, 57) ou l'élément de montage (60, 61).

5. Outil de dénudage (1) selon l'une des revendications précédentes, **caractérisé en ce que** la position de changement est disposée à l'extrémité d'une course de travail de l'outil de dénudage (1).

6. Outil de dénudage (1) selon l'une des revendications précédentes, **caractérisé en ce que** la position de changement est conçue en même temps comme une position de retrait pour la pièce à dénuder.

7. Outil de dénudage (1) selon l'une des revendications précédentes, **caractérisé en ce que**
a) l'élément de coupe (10, 11) est bloqué à l'écart de la position de changement en direction de l'axe de montage (58, 59) par un élément de sécurisation (66),
b) dans la position de changement, l'élément de sécurisation (66) est éloigné de l'élément de coupe (10, 11) de façon à ce que l'élément de coupe (10, 11) ne soit plus bloqué et soit donc libéré.

8. Outil de dénudage (1) selon l'une des revendications précédentes, **caractérisé en ce que** l'outil de dénudage (1) présente
a) une position d'insertion dans laquelle la pièce est insérée dans l'outil de dénudage (1),
b) une position de serrage dans laquelle la pièce est serrée entre des mâchoires de serrage (20, 21) de l'outil de dénudage (1) et/ou une position de coupe dans laquel la pièce est coupée par l'élément de coupe (10, 11) et
c) une position de retrait dans laquelle la pièce peut être retiré de l'outil de dénudage (1),
la position d'insertion, la position de serrage et/ou la position de coupe et la position dénudée étant disposées successivement dans cet ordre sur la course de travail de l'outil de dénudage (1).

9. Outil de dénudage (1) selon l'une des revendications précédentes, **caractérisé en ce que** l'outil de dénudage (1) comprend un dispositif de réserve (19) pour la mise en réserve d'au moins un élément de coupe (10, 11; 51, 52) et/ou d'au moins un élément de serrage (20, 21).

10. Outil de dénudage (1) selon la revendication 9, **caractérisé en ce que** le dispositif de réserve (19) est disposé au niveau d'un levier manuel (18), d'une tête de pince (95) ou d'une mâchoire de pince (3, 4) de l'outil de dénudage (1).

11. Outil de dénudage (1) selon la revendication 10, **caractérisé en ce qu'**un corps de base (73) du levier manuel (18) présente une section transversale ouverte qui peut être fermée au moins partiellement par un couvercle (80) et l'élément de coupe (10, 11) et/ou l'élément de serrage (20, 21) sont/est disposé(s) dans un espace interne (79) du levier manuel (18), qui est délimité par le couvercle (80) et la section transversale ouverte du corps de base (73).

12. Outil de dénudage (1) selon la revendication 11, **caractérisé en ce que** l'élément de coupe (10, 11) et/ou l'élément de serrage (20, 21) est/sont maintenu(s) sur le couvercle (80).

13. Outil de dénudage (1) selon la revendication 11 ou 12, **caractérisé en ce que** le couvercle (80) est disposé sur le côté du corps de base (73) orienté vers un autre levier manuel (17).

14. Outil de dénudage (1) selon l'une des revendications 12 à 13, **caractérisé en ce que** le couvercle (80) est logé de manière pivotante sur le corps de base (73) du levier manuel (18).

15. Outil de dénudage (1) selon la revendication 14, **caractérisé en ce que** le couvercle (80) est logé, au niveau de la partie d'extrémité du couvercle (80) orientée vers une tête de pince, sur le corps de base (73).

16. Outil de dénudage (1) selon l'une des revendications 11 à 15, **caractérisé en ce que** le couvercle (80) est encliqueté ou verrouillé, dans une position de fermeture, avec le corps de base (73) du levier manuel (18).

17. Outil de dénudage (1) selon l'une des revendications 1 à 16, **caractérisé en ce que** l'élément de coupe (10, 11) est formé d'une seule pièce avec
a) un couteau (47, 48) et
b) un corps de maintien (67),
ba) au niveau duquel le couteau (47, 48) est maintenu par liaison de matière et
bb) qui forme une rainure de montage (56, 57) ou un élément de montage (60, 61) pour la fixation interchangeable de l'élément de coupe (10, 11) à une mâchoire de dénudage (6, 7).

18. Outil de dénudage (1) selon la revendication 17, **caractérisé en ce que** l'élément de coupe (10, 11) comprend un organe de guidage ou de maintien (70) pour une entretoise (46).
